# EUROPEAN PATENT APPLICATION

(11) **EP 4 657 360 A1**
(43) Date of publication of application: **03.12.2025**
(21) Application number: 24747309.3
(22) Date of filing: 23.01.2024
(51) Int. Cl.: G06Q 50/10, G06Q 30/0207

(54) **IN-EVENT REMUNERATION DISTRIBUTION SYSTEM**

(30) Priority: 27.01.2023 JP 2023011177
(71) Applicant: JAPAN MEDICAL ENGINEERING INSTITUTE, INC., Tokyo 108-0074 (JP)
(72) Inventor: KASHINO, Toshihiko, Tokyo 108-0074 (JP)
(74) Representative: Wynne-Jones IP Limited
(86) International application number: PCT/JP2024/001881
(87) International publication number: WO 2024/157982

(57) **Abstract**

In a case in which a questionnaire response is received by a questionnaire response receiving unit, a second remaining point number recording unit records a new remaining point number obtained by adding the number of points associated with the questionnaire response to the current number of remaining points associated with a recipient candidate participant who has received the questionnaire response. Points of the number of points received within a range of the number of remaining points recorded in the second remaining point number recording unit from the recipient candidate participant are converted into a reward at a second exchange rate, and a reward corresponding to the number of received points is distributed to the recipient candidate participant.

## Description

### Technical Field

The invention relates to an intra-event reward distribution system that distributes a reward according to the number of points acquired by a recipient candidate participant in one or a plurality of events to the recipient candidate participant.

### Background Art

### (Prior Art)

Patent Literature 1 (Japanese Patent Application Laid-Open (JP-A) No. 2002-189836) discloses an invention relating to a questionnaire system for giving incentives for questionnaire responses to questionnaire respondents, in which a questionnaire survey form is transmitted from a server to terminal devices of members via an Internet network, responses to the questionnaire survey form are acquired, the number of points that can be converted into electronic money as a reward for the questionnaire responses is cumulatively added, and points are given to a member who has given a questionnaire response.

Patent Literature 2 (Japanese Patent Application Laid-Open (JP-A) No. 2002-24590) discloses an invention relating to a network market system using a communication network, in which products of an electronic exhibition advertiser are exhibited in a network market established by an operation manager to exhibit advertisements and the like, product exchange points are given to an electronic customer by purchasing the exhibited products, acquiring advertisement information, participating in various events, and the like, and the operation manager returns an exchange fee for the product exchange points used by the electronic customer to the electronic exhibition advertiser, and evaluates the exhibited products and analyzes preferences of the electronic customer, and the like from various types of information, product exchange information, and the like obtained from the electronic customer.

### Citation List

### Patent Literature

Patent Literature 1: Japanese Patent Application Laid-Open No. 2002-189836
Patent Literature 2: Japanese Patent Application Laid-Open No. 2002-24590

### SUMMARY OF INVENTION

### Technical Problem

An object of the invention is to reduce a work load associated with preparation and distribution of a reward such as a prepaid card and a novelty to be given to a participant who has given a questionnaire response.

Another object of the present disclosure is to promote participation of a large number of participants in an event and improve participation fee revenue.

Still another object of the invention is to reduce the burden of participation costs of event participants.

### Solution to Problem

According to a first aspect, an intra-event reward distribution system that distributes a reward according to the number of points acquired by a recipient candidate participant in one or a plurality of events to the recipient candidate participant includes: a point issuing unit that converts currency received from a provision candidate participant of one or a plurality of events into points at a first exchange rate, and issues points of the number of points corresponding to the received currency to the provision candidate participant; a questionnaire response receiving unit that receives a questionnaire response to a questionnaire associated with each provision candidate participant in association with each recipient candidate participant; a first remaining point number recording unit that records a new number of remaining points obtained by adding the number of issued points to a current number of remaining points associated with the provision candidate participant who has received issued points in a case in which the points are issued from the point issuing unit, and records a new number of remaining points obtained by subtracting the number of points associated with a questionnaire response from the current number of remaining points associated with the provision candidate participant who has received the questionnaire response in a case in which the questionnaire response receiving unit receives the questionnaire response; a second remaining point number recording unit that records a new number of remaining points obtained by adding the number of points associated with the questionnaire response to the current number of remaining points associated with the recipient candidate participant who has received the questionnaire response in a case in which the questionnaire response receiving unit receives the questionnaire response; and a reward distribution unit that converts points of the number of points received within a range of the number of remaining points recorded in the second remaining point number recording unit from the recipient candidate participant into a reward at a second exchange rate and distributes a reward corresponding to the number of received points to the recipient candidate participant.

According to a second aspect, the intra-event reward distribution system in the first aspect further includes: a refund unit that converts points of the number of points received within the range of the number of remaining points from the provision candidate participant into currency at a third exchange rate, and refunds, to the provision candidate participant, any one or a combination of two or more of currency corresponding to the number of received points or digital points, a prepaid card, and an article having a value corresponding to the currency.

According to a third aspect, in the intra-event reward distribution system in the first aspect, the first exchange rate is R1= currency/points, and the second exchange rate is R2= currency/points, and the second exchange rate R2 is equal to or less than the first exchange rate R1.

According to a fourth aspect, in the intra-event reward distribution system in the first aspect, the reward distribution unit distributes a reward in any one or a combination of two or more of tangible currency, a prepaid card, digital points, digital currency, virtual currency, and a novelty.

According to a fifth aspect, in the intra-event reward distribution system in the first aspect, the reward distributed by the reward distribution unit is any one or a combination of two or more of tangible currency, a prepaid card, and a novelty, and the reward distribution unit delivers an amount of reward obtained by subtracting a transfer fee or/and a delivery fee or/and a transfer/delivery fee from the number of received points.

According to a sixth aspect, in the intra-event reward distribution system in the first aspect, the reward distributed by the reward distribution unit is digital points or/and digital currency or/and virtual currency, and the reward distribution unit displays a right to receive the reward on a screen of a terminal on a recipient candidate participant side.

According to a seventh aspect, in the intra-event reward distribution system in the second aspect, the first exchange rate is R1= currency/points, and the third exchange rate is R3= currency/points, the first exchange rate R1 is higher than the third exchange rate R3, and the point issuing unit issues a point including, in advance, an issuance fee corresponding to a difference between the third exchange rate R3 and the first exchange rate R1.

According to an eighth aspect, in the intra-event reward distribution system in the second aspect, the refund unit refunds any one or a combination of two or more of currency obtained by subtracting a refund fee from the number of received points or digital points, a prepaid card, and an article having a value corresponding to the currency.

According to a ninth aspect, the intra-event reward distribution system in the first aspect further includes: an action receiving unit that receives an action for an event content associated with each provision candidate participant in association with each recipient candidate participant; and a third remaining point number recording unit that records the number of remaining points in association with each recipient candidate participant, in which the number of points associated with the action received by the action receiving unit is added to a current number of remaining points.

According to a tenth aspect, the intra-event reward distribution system in the first aspect further includes: a point type conversion receiving unit that receives point type conversion of points recorded in the third remaining point number recording unit from a recipient candidate participant into points recorded in the second remaining point number recording unit; and a point type conversion processing unit that converts the points recorded in the third remaining point number recording unit into the points recorded in the second remaining point number recording unit at a fourth exchange rate in a case in which the point type conversion receiving unit receives the point type conversion, and adds the number of converted conversion points to a current number of remaining points of the second remaining point number recording unit.

According to an eleventh aspect, in the intra-event reward distribution system in the tenth aspect, the second exchange rate is R2= currency/points, and the fourth exchange rate is R4= currency/points, and the fourth exchange rate R4 is lower than the second exchange rate R2.

According to a twelfth aspect, in the intra-event reward distribution system in the first aspect, each time the number of points associated with the questionnaire response received by the questionnaire response receiving unit is added to the current number of remaining points, the second remaining point number recording unit records the added number of points in association with the provision candidate participant who has received the questionnaire response.

According to a thirteenth aspect, in the intra-event reward distribution system in the first aspect, each time the number of points associated with the questionnaire response received by the questionnaire response receiving unit is subtracted from the current number of remaining points, the first remaining point number recording unit records the subtracted number of points in association with the recipient candidate participant who has received the questionnaire response.

According to a fourteenth aspect, in the intra-event reward distribution system in the tenth aspect, each time the number of conversion points is added to the current number of remaining points of the second remaining point number recording unit, the second remaining point number recording unit records an addition time of the number of conversion points in association with the number of conversion points.

According to a fifteenth aspect, in the intra-event reward distribution system in the tenth aspect, the point type conversion receiving unit rejects reception of point type exchange of the number of points exceeding an upper limit value or/and point type conversion at a time exceeding an exchange deadline.

According to a sixteenth aspect, in the intra-event reward distribution system in the fifteenth aspect, in a case of rejecting the reception of the point type exchange of the number of points exceeding the upper limit value or/and the point type conversion at the time exceeding the exchange deadline, the point type conversion receiving unit displays a warning of the rejection on a screen of a terminal on a recipient candidate participant side.

According to a seventeenth aspect, the intra-event reward distribution system in the first aspect further includes: a determination unit that compares the number of remaining points recorded in the first remaining point number recording unit with the number of points associated with the questionnaire response in a case in which the questionnaire response receiving unit receives the questionnaire response, and determines whether or not the number of points associated with the questionnaire response is able to be given to the recipient candidate participant, in which, in a case in which the determination unit determines that the number of points associated with the questionnaire response is able to be given to the recipient candidate participant, addition/subtraction processing of subtracting the number of points associated with the questionnaire response from the current number of remaining points recorded in the first remaining point number recording unit and adding the number of points associated with the questionnaire response to the current number of remaining points recorded in the second remaining point number recording unit is executed, and the intra-event reward distribution system further includes a point addition/subtraction processing unit that executes suspension processing of suspending the addition/subtraction processing in a case in which the determination unit determines that the number of points associated with a questionnaire response is not able to be given to the recipient candidate participant.

According to an eighteenth aspect, the intra-event reward distribution system in the seventeenth aspect further includes: an advance payment account registration unit that registers an advance payment account in association with a provision candidate participant, in which the point addition/subtraction processing unit executes replacement request processing of withdrawing currency corresponding to the number of points associated with a questionnaire response from the advance payment account that is associated with the provision candidate participant and on which the suspension processing has been performed, and executes the addition/subtraction processing, in a case in which the suspension processing has been executed.

According to a nineteenth aspect, the intra-event reward distribution system in the first aspect further includes: a questionnaire provision count calculation unit that compares the number of remaining points recorded in the first remaining point number recording unit with the number of points associated with a questionnaire response and calculates the number of times of a questionnaire with a reward being able to be provided, in which the number of times of the questionnaire with the reward being able to be provided is displayed on a screen of a terminal on a recipient candidate participant side.

According to a twentieth aspect, the intra-event reward distribution system in the first aspect further includes: a questionnaire provision count calculation unit that compares the number of remaining points recorded in the first remaining point number recording unit with the number of points associated with a questionnaire response and calculates the number of times of a questionnaire with a reward being able to be provided, in which, in a case in which the number of times of the questionnaire with the reward being able to be provided is equal to or less than a predetermined number of times, a warning of the case is displayed on a screen of a terminal on a recipient candidate participant side.

According to a 21st aspect, the intra-event reward distribution system in the first aspect further includes: a questionnaire provision count calculation unit that compares the number of remaining points recorded in the first remaining point number recording unit with the number of points associated with a questionnaire response and calculates the number of times of a questionnaire with a reward being able to be provided, in which, in a case in which it is determined that provision of the questionnaire with the reward is not possible based on a calculation result of the questionnaire provision count calculation unit, a warning indicating that the provided questionnaire does not have a reward is displayed on a screen of a terminal on a recipient candidate participant side.

According to a 22nd aspect, in the intra-event reward distribution system in the first aspect, points of the number of remaining points recorded in the second remaining point number recording unit are exchangeable for a product or a service provided by an event cooperation institution at a fifth exchange rate, the second exchange rate is R2= currency/points, and the fifth exchange rate is R5= currency/points, and the fifth exchange rate R5 is set to be higher than the second exchange rate R2.

According to a 23rd aspect, in the intra-event reward distribution system in the first aspect, the first remaining point number recording unit records supplementary information indicating a giving time of the number of points or/and a reward exchange deadline in association with the number of points each time the number of points is added to the current number of remaining points of the first remaining point number recording unit, and records information specifying a recipient candidate participant as a giving destination of the number of points and a provision candidate participant as a giving source or/and supplementary information indicating a giving time or/and a reward exchange deadline in association with the number of points each time the number of points is subtracted from the current number of remaining points of the first remaining point number recording unit.

According to a 24th aspect, the intra-event reward distribution system in the 23rd aspect further includes: a reward exchange possibility determination unit that determines whether or not points of the number of points associated with the supplementary information are exchangeable for a reward based on the supplementary information.

According to a 25th aspect, in the intra-event reward distribution system in the first aspect, each time the number of points is added to the current number of remaining points of the second remaining point number recording unit, the second remaining point number recording unit records information specifying a provision candidate participant as a giving source of the number of points and a recipient candidate participant as a giving destination or/and supplementary information indicating a giving time or/and a reward exchange deadline in association with the number of points.

According to a 26th aspect, the intra-event reward distribution system in the 25th aspect further includes: a reward exchange possibility determination unit that determines whether or not points of the number of points associated with the supplementary information are exchangeable for a reward based on the supplementary information.

According to a 27th aspect, the intra-event reward distribution system in the first aspect further includes: a point addition/subtraction processing unit that executes addition/subtraction processing of subtracting the number of points associated with a questionnaire response from the current number of remaining points recorded in the first remaining point number recording unit and adding the number of points to the current number of remaining points recorded in the second remaining point number recording unit on a condition of approval of the provision candidate participant in a case in which the questionnaire response is received from the recipient candidate participant.

According to a 28th aspect, the intra-event reward distribution system in the 23rd or 25th aspect further includes: a point addition/subtraction processing unit that determines whether or not the number of points associated with a questionnaire response is to be given to the recipient candidate participant based on the supplementary information in a case in which the questionnaire response is received from the recipient candidate participant, and executes addition/subtraction processing of subtracting the number of points associated with a questionnaire response from the current number of remaining points recorded in the first remaining point number recording unit and adding the number of points to the current number of remaining points recorded in the second remaining point number recording unit on a condition of determination that the points are to be given to the recipient candidate participant.

According to a 29th aspect, in the intra-event reward distribution system in the first aspect, the reward distribution unit distributes a reward corresponding to the number of points received from the recipient candidate participant on a condition of approval of a provision candidate participant who has given the number of points associated with the questionnaire response to the recipient candidate participant.

According to a 30th aspect, in the intra-event reward distribution system in the 23rd or 25th aspect, in a case in which an exchange between points and a reward is received from the recipient candidate participant, it is determined whether or not the reward is to be distributed to the recipient candidate participant based on the supplementary information, and the reward distribution unit distributes a reward corresponding to the number of points received from the recipient candidate participant on a condition that it is determined that the reward is to be given to the recipient candidate participant.

According to a 31st aspect, in the intra-event reward distribution system in the first aspect, an upper limit value of the number of responses to a questionnaire with a reward per event or/and an upper limit value of the number of responses to a questionnaire that is able to be made from one provision candidate participant are set, and the questionnaire response receiving unit rejects reception of a questionnaire response exceeding the upper limit value.

According to a 32nd aspect, in the intra-event reward distribution system in the first aspect, an upper limit value of the number of responses to a questionnaire with a reward per event or/and an upper limit value of the number of responses to a questionnaire that is able to be made from one provision candidate participant are set, and the reward distribution unit rejects distribution of a reward corresponding to a questionnaire response exceeding the upper limit value.

According to a 33rd aspect, in the intra-event reward distribution system in the first aspect, a server that manages the questionnaire is included in an event management system that manages the one or plurality of events.

According to a 34th aspect, the intra-event reward distribution system in the first aspect further includes: an event management system including a server that manages the one or plurality of events; and a questionnaire management system that includes a server that manages the questionnaire, and cooperates with the event management system by an API (application programming interface) in the questionnaire management system, in which, in a case in which questionnaire display is requested by a terminal on a recipient candidate participant side, the API in the questionnaire management system is called, and a questionnaire is displayed on a screen of the terminal on the recipient candidate participant side.

According to a 35th aspect, in the intra-event reward distribution system in the 22nd aspect, supplementary information specifying an event in which points of the number of remaining points recorded in the second remaining point number recording unit are given is recorded in association with the points, and the points of the number of remaining points recorded in the second remaining point number recording unit are able to be converted into a reward at the second exchange rate within a holding period or a designated period of the event in which the points are given and are exchangeable exchange, at a fifth exchange rate, for a product or a service provided by the event cooperation institution within the holding period or the designated period of the event in which the points are given.

According to a 36th aspect, in the intra-event reward distribution system in the first aspect, supplementary information specifying an event in which points of the number of remaining points recorded in the second remaining point number recording unit are given is recorded in association with the points, the points of the number of remaining points recorded in the second remaining point number recording unit are able to be converted into a reward at the second exchange rate within a holding period or a designated period of the event in which the points are given and are able to be converted into a reward at the sixth exchange rate outside of the holding period or outside of the designated period of the event in which the points are given, the second exchange rate is R2= currency/points, and the sixth exchange rate is R6= currency/points, and the sixth exchange rate R6 is set to be lower than the second exchange rate R2.

According to a 37th aspect, the intra-event reward distribution system in the first aspect further includes: an event management system including a server configured to manage internal points issued in the one or plurality of events; and an external point management system including a server configured to manage external points issued in an event other than the one or plurality of events, in which the internal points are able to be converted into the external points.

According to a 38th aspect, in the intra-event reward distribution system in the 37th aspect, an exchange rate in a case in which the internal points are converted into the external points is R10= external points/internal points, and the exchange rate R10 is set to a value lower than 1.

According to a 39th aspect, the intra-event reward distribution system in the first aspect further includes: an event management system including a server configured to manage internal points issued in the one or plurality of events; and an external point management system including a server configured to manage external points issued in an event other than the one or plurality of events, in which the external points are able to be converted into the internal points, and supplementary information specifying that the points are issued in an event other than the one or plurality of events is recorded in association with the internal points converted from the external points.

According to a 40th aspect, in the intra-event reward distribution system in the 39th aspect, an exchange rate in a case in which the external points are converted into the internal points is R11= internal points/external points, and the exchange rate R11 is set to a value lower than 1.

According to a 41st aspect, an intra-event reward distribution system that distributes a reward according to the number of points acquired by a recipient candidate participant in one or a plurality of events to the recipient candidate participant includes: an action recording unit that records an action taken with respect to a provision candidate participant by the recipient candidate participant in association with each of the recipient candidate participant and the provision candidate participant; a first remaining point number recording unit that records, in a case in which an action for which a reward is to be distributed is recorded by the action recording unit, a new number of remaining points obtained by subtracting the number of points according to the reward from a current number of remaining points associated with the provision candidate participant on which the action is taken, and records, in association with the number of points according to the reward, information specifying a recipient candidate participant as a giving destination of the number of points according to the reward and a provision candidate participant as a giving source, or/and supplementary information indicating a giving time or/and a reward exchange deadline; and a second remaining point number recording unit that records, in a case in which the action for which the reward is to be distributed is recorded by the action recording unit, a new number of remaining points obtained by adding the number of points according to the reward to the current number of remaining points associated with the recipient candidate participant who has taken the action.

According to a 42nd aspect, the intra-event reward distribution system in the 41st aspect further includes: a reward exchange possibility determination unit that determines whether or not points of the number of points associated with the supplementary information are exchangeable for a reward based on the supplementary information.

According to a 43rd aspect, an intra-event reward distribution system that distributes a reward according to the number of points acquired by a reception candidate participant in one or a plurality of events to the reception candidate participant, the intra-event reward distribution system includes: an action recording unit that records an action taken on a provision candidate participant by the reception candidate participant in association with each of the reception candidate participant and the provision candidate participant; a first remaining point number recording unit that records, in a case in which an action for which a reward is to be distributed is recorded by the action recording unit, a new number of remaining points obtained by subtracting the number of points according to the reward from a current number of remaining points associated with the provision candidate participant on which the action is taken; and a second remaining point number recording unit that records, in a case in which the action for which the reward is to be distributed is recorded by the action recording unit, a new number of remaining points obtained by adding the number of points according to the reward to the current number of remaining points associated with the reception candidate participant who has taken the action, and records, in association with the number of points according to the reward, information specifying a reception candidate participant as a giving destination of the number of points according to the reward and a provision candidate participant as a giving source, or/and supplementary information indicating a giving time or/and a reward exchange deadline.

According to a 44th aspect, the intra-event reward distribution system in the 43rd aspect further includes: a reward exchange possibility determination unit that determines whether or not points of the number of points associated with the supplementary information are exchangeable for a reward based on the supplementary information.

According to a 45th aspect, the intra-event reward distribution system in the 41st or 43rd aspect further includes: an event management system including a server configured to manage internal points issued in the one or plurality of events; and an external point management system including a server configured to manage external points issued in an event other than the one or plurality of events, in which the internal points are able to be converted into the external points.

According to a 46th aspect, the intra-event reward distribution system in the 41st or 43rd aspect further includes: an event management system including a server configured to manage internal points issued in the one or plurality of events; and an external point management system including a server configured to manage external points issued in an event other than the one or plurality of events, in which the external points are able to be converted into the internal points, and supplementary information specifying that the points are issued in an event other than the one or plurality of events is recorded in association with the internal points converted from the external points.

### Advantageous Effects

According to the first to 46th aspects, it is possible to reduce a work load associated with preparation and distribution of a reward such as a prepaid card and a novelty to be given to a participant who has given a questionnaire response, as compared with the prior art. As compared with the prior art, it is possible to promote the participation in the event and improve the participation fee revenue. As compared with the prior art, it is possible to reduce the cost burden associated with participation of a participant in the event.

### BRIEF DESCRIPTION OF DRAWINGS

Fig. 1 is a diagram illustrating a configuration of an intra-event reward distribution system according to an embodiment.
Fig. 2 is a block diagram illustrating a hardware configuration of the embodiment.
Fig. 3 is a block diagram illustrating a functional configuration of an intra-event reward distribution system according to a first embodiment.
Fig. 4A is a diagram illustrating a point purchase screen.
Fig. 4B is a diagram illustrating a point issuance screen.
Fig. 5A is a diagram illustrating first remaining point number recording data recorded in a first remaining point number recording unit.
Fig. 5B is a diagram illustrating first remaining point number recording data recorded in the first remaining point number recording unit.
Fig. 6A is a diagram illustrating a questionnaire response reception screen.
Fig. 6B is a diagram illustrating a questionnaire response received screen.
Fig. 7 is a diagram illustrating first remaining point number recording data recorded in the first remaining point number recording unit.
Fig. 8A is a diagram illustrating second remaining point number recording data recorded in a second remaining point number recording unit.
Fig. 8B is a diagram illustrating second remaining point number recording data recorded in the second remaining point number recording unit.
Fig. 9 is a diagram illustrating second remaining point number recording data recorded in the second remaining point number recording unit.
Fig. 10A is a diagram illustrating a reward distribution screen.
Fig. 10B is a diagram illustrating a reward distributed screen.
Fig. 11 is a diagram illustrating contents of the second remaining point number recording data after reward distribution.
Fig. 12 is a diagram illustrating an approval screen.
Fig. 13 is a diagram illustrating the approval screen.
Fig. 14 is a network configuration diagram according to an eighth example.
Fig. 15 is a diagram illustrating a software cooperation relationship between an event management system and a questionnaire management system.
Fig. 16 is a network configuration diagram according to a tenth example.
Fig. 17 is a diagram illustrating a software cooperation relationship between an event management system and an external point management system.
Fig. 18A is a diagram illustrating a point conversion reception screen.
Fig. 18B is a diagram illustrating a point converted screen.
Fig. 19A is a diagram illustrating the point conversion reception screen.
Fig. 19B is a diagram illustrating the point converted screen.
Fig. 20 is a diagram illustrating contents of recording data in a supplementary information recording unit.
Fig. 21 is a diagram illustrating contents of recording data in the supplementary information recording unit.
Fig. 22 is a diagram illustrating contents of recording data in the supplementary information recording unit.

### DESCRIPTION OF EMBODIMENTS

Hereinafter, embodiments of the invention will be described with reference to the drawings.

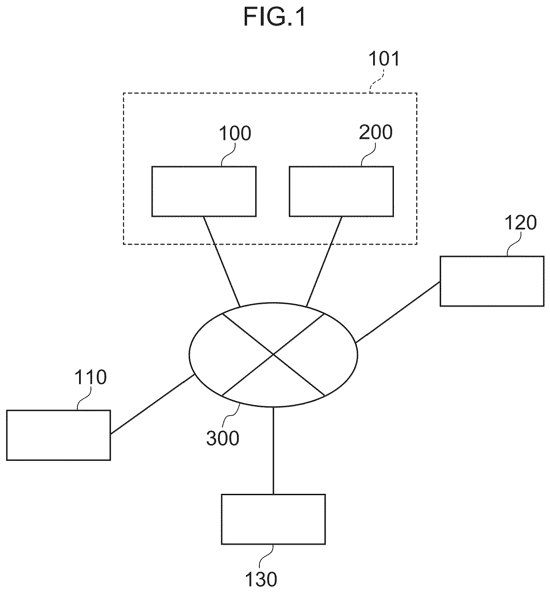

Fig. 1 is a diagram illustrating a configuration of an intra-event reward distribution system according to an embodiment.

Events which are a target of the embodiment include all events for which a reward can be generated in response to a questionnaire response or the like in an event such as an exhibition, an academic conference, a conference, a place for information exchange, a lecture, and a matching event. The event as the target of the embodiment may be online or offline. Here, an online event is a concept including an event performed in a hybrid manner. Not all constituent elements of the event need necessarily be online. For example, an event combining a real event venue with live streaming and a virtual room is also included in the concept of the online event.

In the following description, it is assumed that an event system is performed online.

An intra-event reward distribution system includes a point issuing institution-side terminal 100A as an event operating institution-side terminal 100, a reward distribution institution-side terminal 100B as the event operating institution-side terminal 100, an advance payment account institution-side terminal 110, a provision candidate participant-side terminal 120, a recipient candidate participant-side terminal 130, a server 200, and a network 300 that connects the respective terminals and the server 200 so that data can be mutually transmitted and received between the respective terminals and the server 200. The point issuing institution-side terminal 100A and the reward distribution institution-side terminal 100B are collectively referred to as the event operating institution-side terminal 100. An event management system 101 can be constituted by a management system including the point issuing institution-side terminal 100A and the reward distribution institution-side terminal 100B as the event operating institution-side terminal 100, and the server 200. For example, the point issuing institution-side terminal 100A and the reward distribution institution-side terminal 100B are provided in an event operating institution, and the event operating institution has an access authority to a database of the server 200. The event management system 101 manages one event A1 or a plurality of events A1 to A10.

A provision candidate participant is a participant who can provide a questionnaire to a recipient candidate participant and provide a reward for a questionnaire response to the recipient candidate participant, and includes an exhibiting institution and the like. The exhibiting institution includes a company such as a medical device manufacturer or a product manufacturing company, a public institution other than a company, a university, and the like, and, in the embodiment, the exhibiting institution will be described as an exhibiting company. In the embodiment, it is assumed that a plurality of companies exhibits in booths as sponsor companies in a case in which a matching event such as an academic lecture of an academic society, a conference, a symposia, a research meeting, a study meeting, an interaction meeting, a seminar, or an exhibition is held.

The recipient candidate participant is a participant who makes a questionnaire response and can receive a reward according to the questionnaire response from the provision candidate participant, and includes a general participant and the like. In the intra-event reward distribution system, a reward according to the number of points acquired by a recipient candidate participant in one or a plurality of events is distributed to the recipient candidate participant.

The point issuing institution is an institution that issues points of the number of points corresponding to the currency received from the provision candidate participant to the provision candidate participant, and can also serve as the event operating institution.

The reward distribution institution is an institution that distributes a reward corresponding to the number of points received from the recipient candidate participant to the recipient candidate participant, and can also serve as the event operating institution. The point issuing institution can also serve as the reward distribution institution and a refund institution.

In holding an event such as an academic lecture of an academic society, a person who manages the event is referred to as a manager. A presenter, a general participant, and an exhibiting institution, other than the manager are collectively referred to as a participant. The participant may be either an individual or a corporation. Participants are roughly divided into the provision candidate participants and the recipient candidate participants as described above.

The point issuing institution-side terminal 100A and the reward distribution institution-side terminal 100B as the event operating institution-side terminal 100, the provision candidate participant-side terminal 120, and the recipient candidate participant-side terminal 130 are information processing devices, and include, for example, a personal computer, a smartphone, or the like. A network 300 includes the Internet, an intranet, or the like. The server 200 includes a server device, a virtual server constructed on a cloud computing service, or the like.

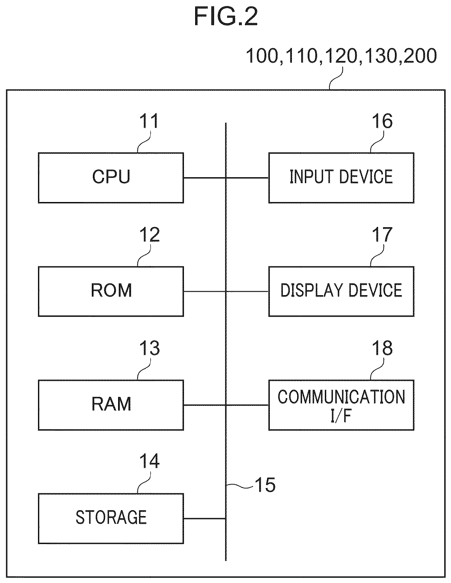

Fig. 2 is a block diagram illustrating a hardware configuration of the point issuing institution-side terminal 100A and the reward distribution institution-side terminal 100B as the event operating institution-side terminal 100, the provision candidate participant-side terminal 120, the recipient candidate participant-side terminal 130, and the server 200 of the embodiment.

As illustrated in Fig. 2, the point issuing institution-side terminal 100A, the reward distribution institution-side terminal 100B, the provision candidate participant-side terminal 120, the recipient candidate participant-side terminal 130, and the server 200 are configured by computers, and a CPU (Central Processing Unit) 11, a ROM (Read Only Memory) 12, a RAM (Random Access Memory) 13, a storage 14, an input device 16, a display device 17, and a communication I/F 18 are communicatively connected to each other via a system bus 15.

The CPU 11 is a central processing unit, and executes various programs and controls the devices connected to the system bus 15. That is, the CPU 11 reads a program from the ROM 12 or the storage 14 and executes the program by using the RAM 13 as a work area. The CPU 11 controls each device connected to the system bus 15 and performs various types of arithmetic processing in accordance with a program recorded in the ROM 12 or the storage 14. The ROM 12 or the storage 14 retains a BIOS (Basic InPUt/OUtPUt System) or an OS (OPerating System) which is a control program executed by the CPU 11, a computer readable and executable program for realizing the present embodiment, and various types of necessary data.

The ROM 12 stores various control programs and various types of data. The RAM 13 functions as a main memory of the CPU 11, a work area, or the like and temporarily stores a program or data in the work area. The storage 14 is configured by an HDD (Hard Disk Drive) or an SSD (Solid State Drive), and stores various programs including a BIOS and an OS and various types of data.

The input device 16 includes a pointing device such as a mouse and a keyboard, and is used to perform various inputs.

The display device 17 is, for example, a liquid crystal display, and displays various types of information. The display device 17 may function as the input device 16 by adopting a touch panel system.

Various display screens 500 to 590 which will be described later are displayed on a display screen of the display device 17.

The communication interface 18 is an interface for communicating with other devices, and for example, standards such as Ethernet (registered trademark), FDDI, or Wi-Fi (registered trademark) are used. The communication interface 18 is connected to the network 300 and controls transmission and reception of data.

### (First Embodiment)

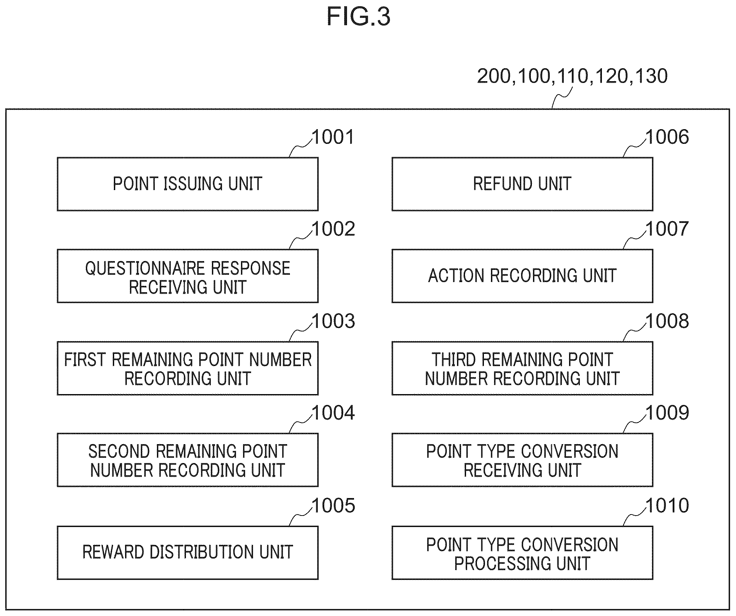

Fig. 3 is a block diagram illustrating a functional configuration of an intra-event reward distribution system according to a first embodiment. The functional configuration illustrated in Fig. 3 includes a server 200, a point issuing institution-side terminal 100A, a reward distribution institution-side terminal 100B, a provision candidate participant-side terminal 120, and a recipient candidate participant-side terminal 130. The server 200 is a server managed by the event operating institution.

The intra-event reward distribution system is configured to include a point issuing unit 1001, a questionnaire response receiving unit 1002, a first remaining point number recording unit 1003, a second remaining point number recording unit 1004, a reward distribution unit 1005, a refund unit 1006, an action recording unit 1007, a third remaining point number recording unit 1008, a point type conversion receiving unit 1009, a point type conversion processing unit 1010, a determination unit 1011, a point addition/subtraction processing unit 1012, an advance payment account registration unit 1013, a questionnaire provision count calculation unit 1014, and a warning display unit 1015.

The point issuing unit 1001 converts currency received from a provision candidate participant in one or a plurality of events into points at a first exchange rate, and issues points of the number of points corresponding to the received currency to the provision candidate participant.

Issuing points on a condition of exchange for currency is an example, and the point issuing unit 1001 may issue points of a predetermined number of points to the provision candidate participant without exchange for currency.

The questionnaire response receiving unit 1002 receives the questionnaire responses to the questionnaire associated with each of the provision candidate participants in association with each of the recipient candidate participants.

In a case where points are issued from the point issuing unit 1001, the first remaining point number recording unit 1003
records the new number of remaining points obtained by adding the number of issued points from the current number of remaining points associated with the provision candidate participant who has received point issuance, and in a case in which the questionnaire response receiving unit 1002 receives a questionnaire response, records the new number of remaining points obtained by subtracting the number of points associated with the questionnaire response from the current number of remaining points associated with the provision candidate participant who has received the questionnaire response.

In a case in which the questionnaire response is received by the questionnaire response receiving unit 1002, the second remaining point number recording unit 1004 records the new remaining point number obtained by adding the number of points associated with the questionnaire response to the current number of remaining points associated with the recipient candidate participant who has received the questionnaire response.

The reward distribution unit 1005 converts points of the number of points received within a range of the number of remaining points recorded in the second remaining point number recording unit 1004 from the recipient candidate participant into a reward at a second exchange rate, and distributes a reward corresponding to the number of received points to the recipient candidate participant.

The refund unit 1006 converts points of the number of points received within the range of the number of remaining points from the provision candidate participant into currency at a third exchange rate, and refunds, to the provision candidate participant, any one or a combination of two or more of currency corresponding to the number of received points or digital points, a prepaid card, and an article having a value corresponding to the currency.

The action recording unit 1007 records an action for an event content associated with each provision candidate participant in association with each recipient candidate participant.

The third remaining point number recording unit 1008 records the number of remaining points in association with each recipient candidate participant. In the third remaining point number recording unit 1008, the number of points associated with the action received by the action receiving unit 1007 is added to the current number of remaining points.

The point type conversion receiving unit 1009 receives point type conversion of points recorded in the third remaining point number recording unit 1008 from the recipient candidate participant into points recorded in the second remaining point number recording unit 1004.

In a case in which the point type conversion is received by the point type conversion receiving unit 1009, the point type conversion processing unit 1010 converts the points recorded in the third remaining point number recording unit 1008 into the points recorded in the second remaining point number recording unit 1004 at a fourth exchange rate, and adds the converted number of conversion points to the current number of remaining points of the second remaining point number recording unit 1004.

In a case in which the questionnaire response is received by the questionnaire response receiving unit 1002, the determination unit 1011 compares the number of remaining points recorded in the first remaining point number recording unit 1003 with the number of points associated with the questionnaire response, and determines whether or not the number of points associated with the questionnaire response can be given to the recipient candidate participant.

The point addition/subtraction processing unit 1012 executes addition/subtraction processing of subtracting the number of points associated with the questionnaire response from the current number of remaining points recorded in the first remaining point number recording unit 1003 and adding the number of points associated with the questionnaire response to the current number of remaining points recorded in the second remaining point number recording unit 1004 in a case in which the determination unit 1011 determines that the number of points associated with the questionnaire response can be given to the recipient candidate participant, and executes suspension processing of suspending the addition/subtraction processing in a case in which the determination unit 1011 determines that the number of points associated with the questionnaire response cannot be given to the recipient candidate participant. The point addition/subtraction processing unit 1012 executes the addition/subtraction processing in a case in which other predetermined condition is satisfied, and executes the suspension processing in a case in which the other predetermined condition is not satisfied.

The advance payment account registration unit 1013 registers an advance payment account in association with the provision candidate participant.

The questionnaire provision count calculation unit 1014 compares the number of remaining points recorded in the first remaining point number recording unit 1003 with the number of points associated with the questionnaire response, and calculates the number of times of a questionnaire with a reward being able to be provided.

In a case in which the number of times of the questionnaire with a reward being able to be provided is equal to or less than a predetermined number of times, the warning display unit 1015 displays a warning for this case on the screen of the terminal on the recipient candidate participant side.

The reward exchange possibility determination unit 1016 determines whether or not points of the number of points associated with supplementary information are exchangeable for a reward based on the supplementary information.

### (First Example)

### (Point Issuance)

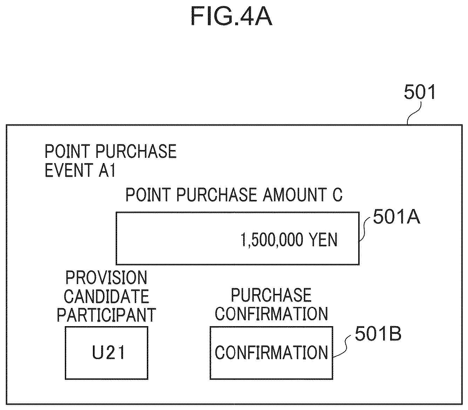

Fig. 4A illustrates a point purchase screen 501. The point purchase screen 501 is a display screen to which provision candidate participants of the event A1 have access authority.

In holding the event A1, a provision candidate participant U21 who intends to provide a questionnaire to a recipient candidate participant in a display booth or the like of the event A1 can purchase points of the number of points corresponding to the number of questionnaires provided, from a point issuing institution PB on the point purchase screen 501.

The point purchase screen 501 is displayed on the display screen of the display device 17 of the provision candidate participant-side terminal 120 by accessing the server 200 from the provision candidate participant-side terminal 120.

On the point purchase screen 501, a point purchase amount input portion 501A and a point conversion confirmation button 501B are displayed. In a case in which the provision candidate participant U21 performs an operation of inputting the currency C (for example, 1.5 million yen) in the point purchase amount input portion 501A and performs an operation of pressing the point conversion confirmation button 501B, point issuance is received.

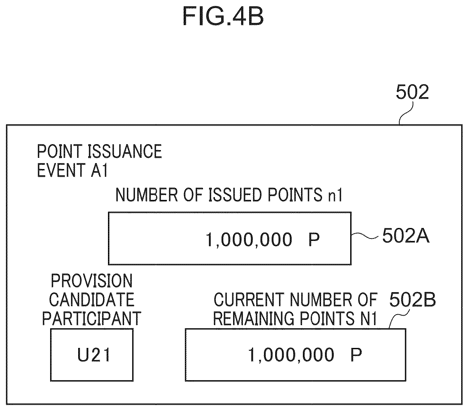

In a case in which the point issuance is received, the point issuing unit 1001 converts the currency C received from the provision candidate participant U21 into points P at a first exchange rate R1, and issues the points P of the number of points n1 corresponding to the received currency C to the provision candidate participant U21. That is, the display screen of the display device 17 of the provision candidate participant-side terminal 120 transitions to a point issuance screen 502 illustrated in Fig. 4B. On the point issuance screen 502, the points P (for example, 1 million points P) of the number of points n1 issued to the provision candidate participant U21 and the current number of remaining points N1 (for example, 1 million points P) are displayed. Here, the first exchange rate R1 is, for example, 1.5 yen/1 point. By displaying the point issuance screen 502, the provision candidate participant U21 can confirm the number of points N1 (for example, 1 million points P) of the point P held by the provision candidate participant.

### (First Remaining Point Number Recording in Response to Point Issuance)

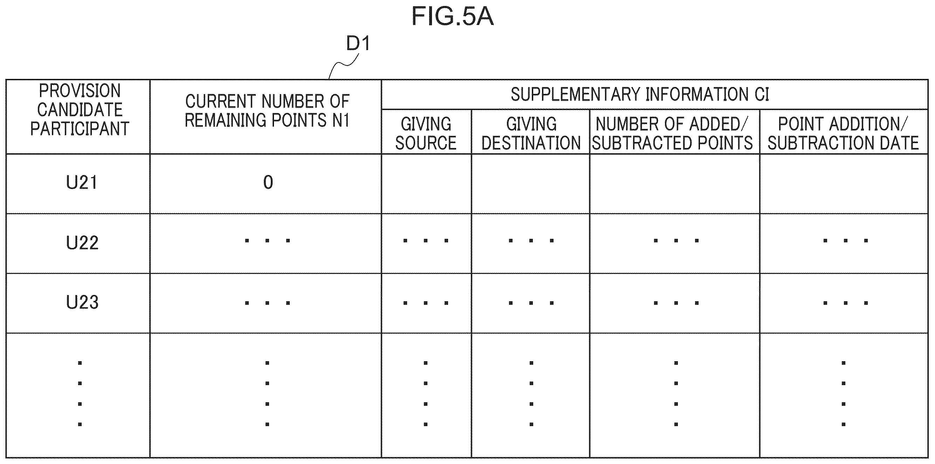

Fig. 5A illustrates first remaining point number recording data D1 recorded in the first remaining point number recording unit 1003. The first remaining point number recording data D1 is stored in, for example, a database of the server 200.

The first remaining point number recording data D1 includes the current number of remaining points N1 associated with each provision candidate participant.

The current number of remaining points N1 is associated with the provision candidate participant U21. In an initial state, the current number of remaining points N1 is 0.

As illustrated in Fig. 4B, the number of issued points n1 (for example, 1 million points P) is added to the current number of remaining points N1 (=0) associated with the provision candidate participant U21 in response to the issuance of the points P of the point number n1 (for example, 1 million points P). As a result, the current number of remaining points N1 (=0) associated with the provision candidate participant U21 is updated to the current number of remaining points N1 (=1 million points P) added by n1 (=1 million P).

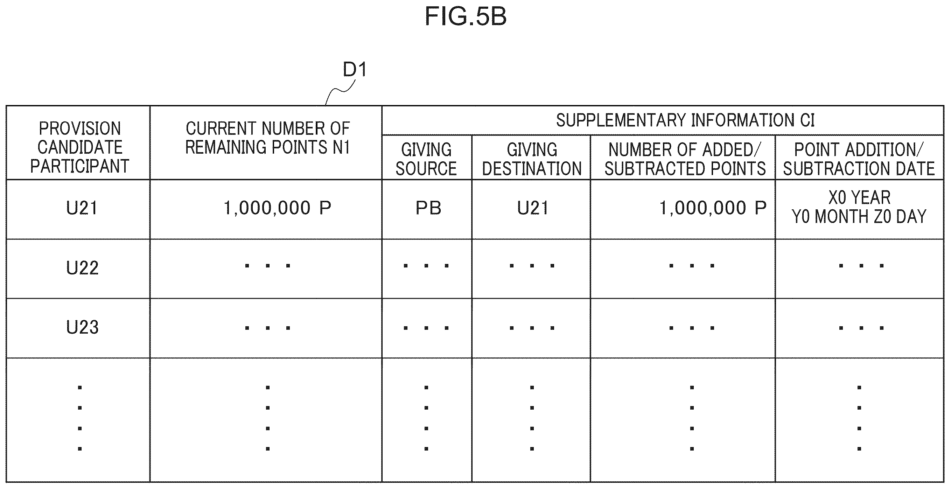

As illustrated in Fig. 5B, the first remaining point number recording unit 1003 records supplementary information CI, that is, information specifying a giving source, for example, an ID ("PB") of the point issuing institution PB, information specifying a giving destination, for example, a user ID ("U21") of the provision candidate participant, the number of added/subtracted points (number of issued points, number of given points) n1, and the point addition/subtraction date "X0 year Y0 month Z0 day" in association with the points (=1 million points P) of the number of points n1 added this time.

### (Reception of Questionnaire Response)

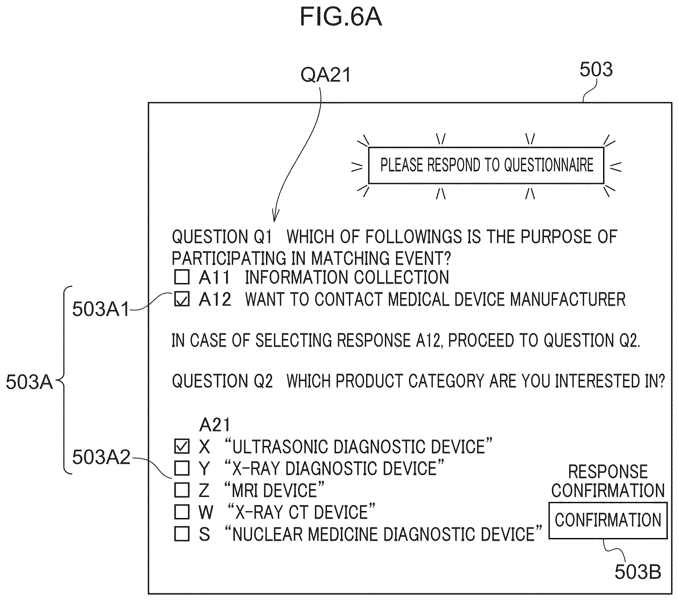

Fig. 6A illustrates a questionnaire response reception screen 503. The questionnaire response reception screen 503 is a display screen to which recipient candidate participants of the event A1 have access authority.

A recipient candidate participant U11 who has participated in the event A1 can respond to a questionnaire QA21 provided by the provision candidate participant U21 on the questionnaire response reception screen 503.

By accessing the server 200 from the recipient candidate participant-side terminal 130, the questionnaire response reception screen 503 is displayed on the display screen of the display device 17 of the recipient candidate participant-side terminal 130. For example, on the screen of the display device 17 of the recipient candidate participant-side terminal 130, a click operation to instruct a specific provision candidate participant U21 (for example, a display portion of the "exhibiting company booth U21") is performed, whereby the questionnaire response reception screen 503 associated with the provision candidate participant U21 is displayed.

On the questionnaire response reception screen 503, a questionnaire response reception portion 503A and a response confirmation button 503B are displayed. In the questionnaire response reception portion 503A, for example, questions and response options, for example, a question Q1 regarding the purpose of participating in a matching event and response options A11 "information collection", A12 "I want to contact a medical device manufacturer/distributor", and a question Q2 regarding a product category of interest and a response option A21 (select one of product category X "ultrasonic diagnostic device", Y "X-ray diagnostic device", Z "MRI device", W "X-ray CT device", S "nuclear medical diagnostic device") are displayed. The recipient candidate participant U11 responds to the questionnaire QA21, for example, by performing an operation of checking check boxes 503A1 and 503A2 associated with the response options corresponding to the questions Q1 and Q2. The form of the question and the response can be freely set, and a question in an entry manner of filling in a response in a text box may be used.

### (Storage of Questionnaire Response)

In a case in which an operation of pressing the response confirmation button 503B is performed, questionnaire response data D3 is stored in the database of the server 200 in association with the recipient candidate participant U11 who has received the questionnaire response and the provision candidate participant U21 who has provided the questionnaire. The provision candidate participant U21 who has provided the corresponding questionnaire has an authority to access the questionnaire response data D3. For example, the questionnaire response data D3 is displayed to be browsable by performing a click operation for an instruction to browse the questionnaire response result on the screen of the display device 17 of the provision candidate participant-side terminal 120.

### (First Remaining Point Number Recording in Response to Questionnaire Response)

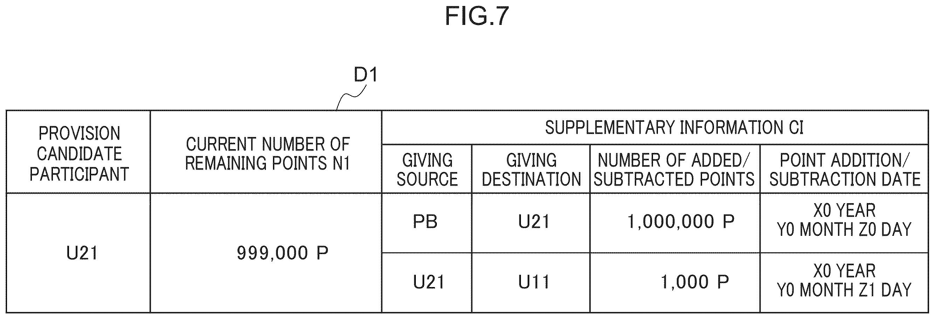

Fig. 7 illustrates the first remaining point number recording data D1 recorded in the first remaining point number recording unit 1003.

The current number of remaining points N1 is associated with the provision candidate participant U21. In a state before the reception of the questionnaire response, the current number of remaining points N1 is, for example, 1 million points P as illustrated in Fig. 5B.

Here, the number of points n2 according to a reward for the response to the questionnaire QA21 is, for example, 1000 points P.

As illustrated in Fig. 7, in response to reception of the questionnaire response, the number of points n2 (for example, 1000 points P) corresponding to the reward for the questionnaire response is subtracted from the current number of remaining points N1 (=1 million points P) associated with the provision candidate participant U21. As a result, the current number of remaining points N1 (=1 million points P) associated with the provision candidate participant U21 is updated to the current number of remaining points N1 (=999000 points P) obtained by subtracting n2 (= 1000 points P).

Each time the number of points n2 (for example, 1000 points P) associated with the questionnaire response received by the questionnaire response receiving unit 1002 is subtracted from the current number of remaining points, the first remaining point number recording unit 1003 records the number of points n2 (for example, 1000 points P) to be subtracted, in association with the recipient candidate participant (for example, the user ID "U11" of the recipient candidate participant) who has received the questionnaire response.

That is, the first remaining point number recording unit 1003 records the supplementary information CI, that is, information specifying a giving source, for example, a user ID ("U21") of the provision candidate participant, information specifying a giving destination, for example, a user ID ("U11") of the recipient candidate participant, the number of added/subtracted points (for example, 1000 points P) n2, and the point addition/subtraction date "XO year YO month Z1 day" in association with the points (=1000 points P) of the number of points n2 subtracted this time.

### (Second Remaining Point Number Recording in Response to Questionnaire Response)

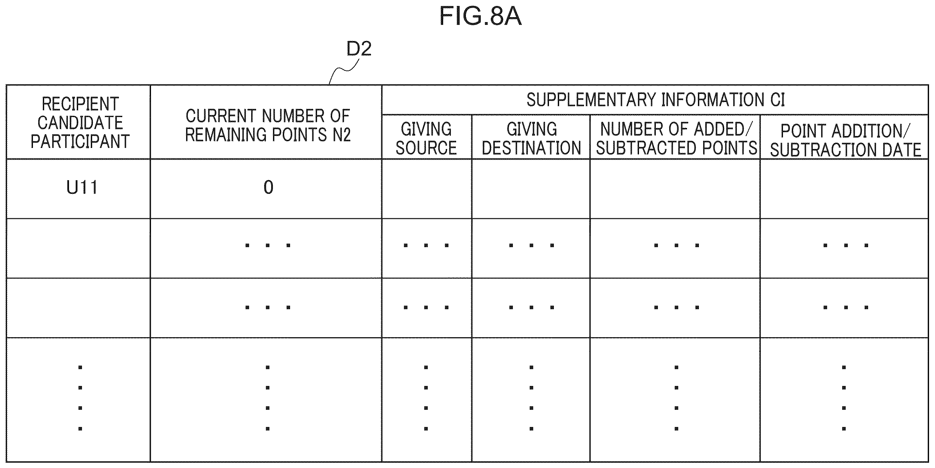

Fig. 8A illustrates second remaining point number recording data D2 recorded in the second remaining point number recording unit 1004. The second remaining point number recording data D2 is stored in, for example, the database of the server 200.

The second remaining point number recording data D2 includes the current number of remaining points N2 and the supplementary information CI associated with each recipient candidate participant.

The current number of remaining points N2 is associated with the recipient candidate participant U11. In the state before the reception of the questionnaire response, the current number of remaining points N2 is, for example, 0 points P.

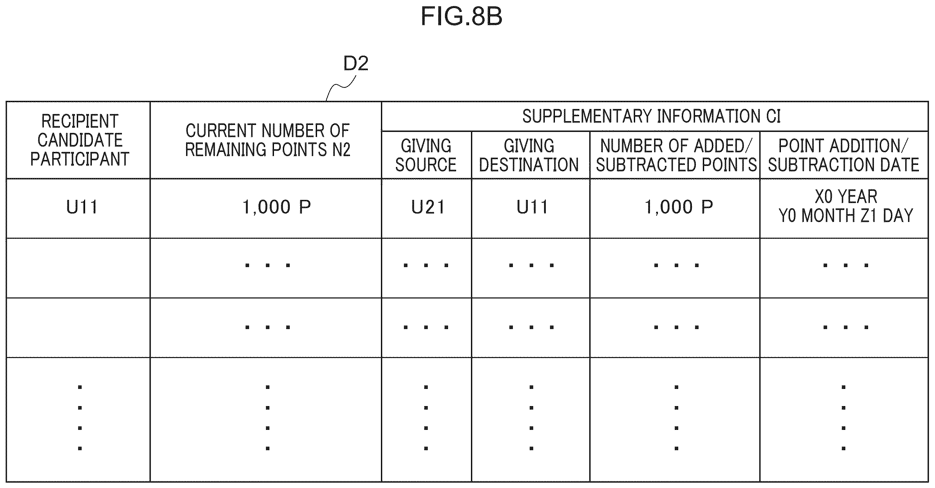

As illustrated in Fig. 8B, in response to reception of the questionnaire response, the number of points n2 (for example, 1000 points P) corresponding to the reward for the questionnaire response is added to the current number of remaining points N2 (=0 points P) associated with the recipient candidate participant U11. As a result, the current number of remaining points N2 (=0 points P) associated with the recipient candidate participant U11 is updated to the current number of remaining points N2 (=1000 points P) obtained by adding n2 (= 1000 points P).

Each time the number of points n2 (for example, 1000 points P) associated with the questionnaire response received by the questionnaire response receiving unit 1002 is added to the current number of remaining points, the second remaining point number recording unit 1004 records the number of points to be added, in association with the provision candidate participant (for example, the user ID "U21" of the provision candidate participant) who has received the questionnaire response.

That is, as illustrated in Fig. 8B, the second remaining point number recording unit 1004 records the supplementary information CI, that is, the information specifying a giving source, for example, a user ID ("U21") of the provision candidate participant, the information specifying a giving destination, for example, a user ID ("U11") of the recipient candidate participant, the number of added/subtracted points (for example, 1000 points P) n2, and the point addition/subtraction date "X0 year Y0 month Z1 day" in association with the points (=1000 points P) of the number of points n2 added this time.

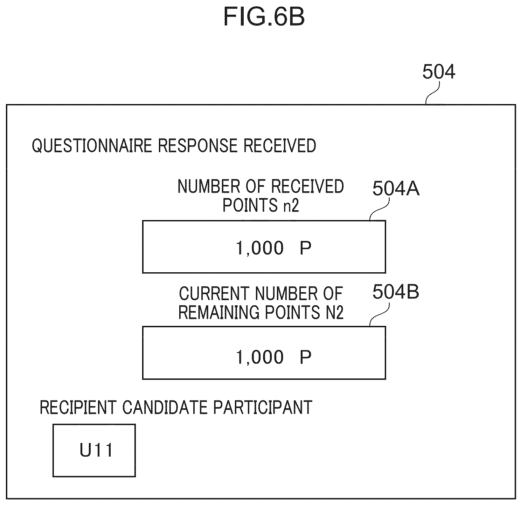

In a case in which the questionnaire response is received, the display screen of the display device 17 of the recipient candidate participant-side terminal 130 transitions to a questionnaire response received screen 504 illustrated in Fig. 6B. Points P (for example, 1000 points P) of the number of points n2 currently received by the recipient candidate participant U11 and the current number of remaining points N2 (for example, 1000 points P) are displayed on display portions 504A and 504B on the questionnaire response received screen 504, respectively. Here, the current number of remaining points N2 recorded in the second remaining point number recording unit 1004 can be converted into a reward at a second exchange rate R2. The second exchange rate R2 is, for example, 1 yen/1 point. The second exchange rate R2 (for example, 1 yen/1 point) can be set to be lower than the first exchange rate R1 (for example, 1.5 yen/1 point). As a result, the point issuing institution PB as the event operating institution can collect the operating cost of the event A1 and the transfer fee or the delivery fee of the reward even in a case in which the reward is paid.

By displaying the questionnaire response received screen 504, the recipient candidate participant U11 can confirm the number of points N2 (for example, 1000 points P) of the points P held by the recipient candidate participant.

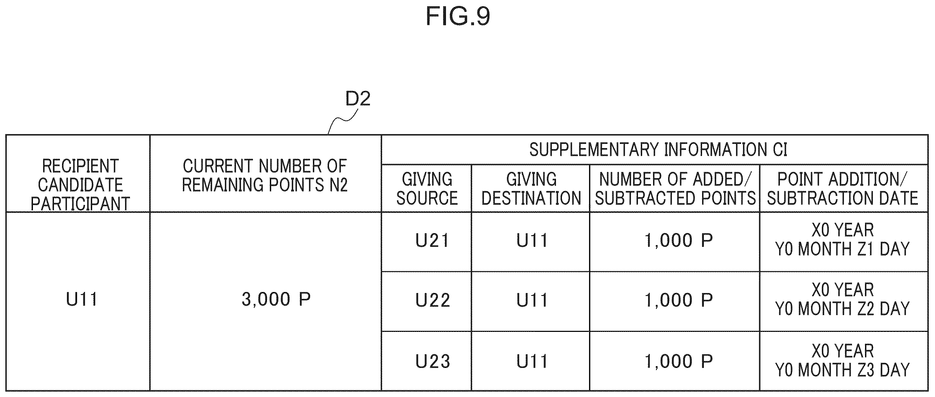

In the similar manner, in a case in which the recipient candidate participant U11 responds to questionnaires QA22 and QA23 of the same amount of reward that is 1000 points P and is provided from other provision candidate participants U22 and U23, as illustrated in Fig. 9, the second remaining point number recording unit 1004 records, in association with the recipient candidate participant U11, the second remaining point number recording data D2 including the current number of remaining points N2 (3000 points P) and the supplementary information CI indicating that the number of points n2 (1000 points P) is received from the provision candidate participant U21 on X0 year YO month Z1 day, the number of points n2 (1000 points P) is received from the provision candidate participant U22 on X0 year Y0 month Z2 day, and the number of points n2 (1000 points P) is received from the provision candidate participant U23 on X0 year Y0 month Z3 day.

### (Reward Distribution)

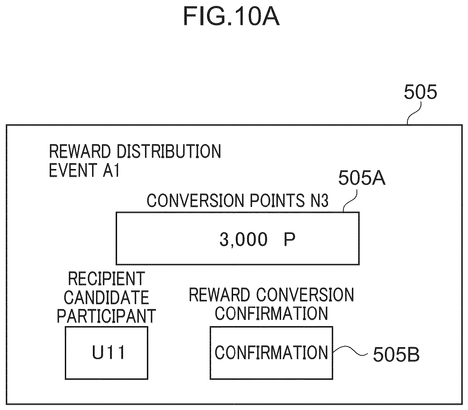

Fig. 10A illustrates a reward distribution screen 505. The reward distribution screen 505 is a display screen to which the recipient candidate participants of the event A1 have access authority.

The recipient candidate participant U11 who has participated in the event A1 can receive the reward on the reward distribution screen 505.

By accessing the server 200 from the recipient candidate participant-side terminal 130, the reward distribution screen 505 is displayed on the display screen of the display device 17 of the recipient candidate participant-side terminal 130.

On the reward distribution screen 505, a conversion point input portion 505A and a reward conversion confirmation button 505B are displayed. In a case in which the recipient candidate participant U11 performs an operation of inputting the number of conversion points N3 (for example, 3000 points P) to the conversion point input portion 505A and performs an operation of pressing the reward conversion confirmation button 505B, reward distribution is received.

In a case in which the reward distribution is received, the reward distribution unit 1005 converts points (for example, 3000 points P) of the number of points N3 received within a range of the number of remaining points N2 recorded in the second remaining point number recording unit 1004 from the recipient candidate participant U11 into a reward at the second exchange rate R2, and distributes a reward corresponding to the number of received points N3 to the recipient candidate participant U11.

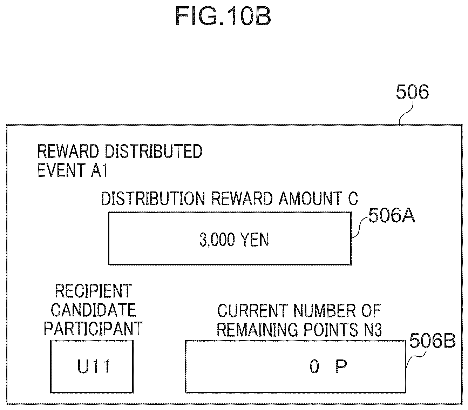

That is, in a case in which the reward distribution is received, the display screen of the display device 17 of the recipient candidate participant-side terminal 130 transitions to a reward distributed screen 506 illustrated in Fig. 10B. A reward amount C (for example, 3000 yen) distributed this time to recipient candidate participant U11 and the current number of remaining points N2 (for example, 0 points P) are displayed on display portions 506A and 506B on the reward distributed screen 506, respectively. By displaying the reward distributed screen 506, the recipient candidate participant U11 can confirm the number of points N2 (for example, 0 points P) of the points P held by the recipient candidate participant.

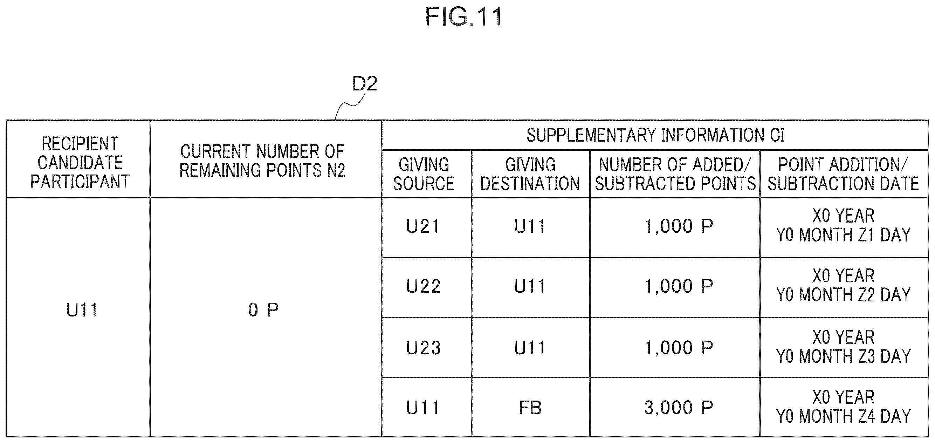

Fig. 11 illustrates contents of the second remaining point number recording data D2 after the reward distribution.

In response to distribution of the reward amount C (for example, 3000 yen) to the recipient candidate participant U11, supplementary information CI indicating that the number of points n3 (3000 points P) has been given from the recipient candidate participant U11 to a reward distribution institution FB on X0 year YO month Z4 day is added to the second remaining point number recording unit 1004.

The type of reward distributed by the reward distribution unit 1005 can be freely set. Any value corresponding to the reward amount C (for example, 3000 yen) may be used, and any one or a combination of two or more of tangible currency, a prepaid card, digital points, digital currency, virtual currency, and a novelty can be used.

A method of distributing the reward by the reward distribution unit 1005 can be freely set. In a case in which the reward is tangible currency, the reward may be transferred to an account designated by the recipient candidate participant (for example, U11), or may be delivered to a place designated by the recipient candidate participant (for example, U11) via a delivery company.

In a case in which the reward is a prepaid card or a novelty, the reward may be delivered to a place designated by the recipient candidate participant (for example, U11) via the delivery company.

In a case in which the reward is digital points, digital currency, or virtual currency, the right to receive the digital points, digital currency, or virtual currency may be given to the recipient candidate participant (for example, U11) on the reward distributed screen 506. For example, a serial code, a URL, or the like specifying the right to receive the digital point, the digital currency, or the virtual currency can be displayed on the reward distributed screen 506.

In a case in which the reward is any one or a combination of two or more of tangible currency, a prepaid card, and a novelty, the reward distribution unit 1005 may deliver a reward of an amount (for example, 2500 yen) obtained by subtracting a transfer fee or/and a delivery fee or/and a transfer/delivery fee (for example, 500 yen) from the points P (for example, 3000 points P) of the number of received points N3.

In the first example, as illustrated in Fig. 11, the supplementary information CI is set to be recorded in the second remaining point number recording unit 1004 in association with the points of the number of points added/subtracted this time.

However, this is an example, and the supplementary information CI may be recorded in association with an action taken by a person involved in the event.

The person involved in the event is the point issuing institution PB, the reward distribution institution FB, a provision candidate participant, a recipient candidate participant, an event cooperation institution, an event operating institution, an external point management institution, or the like.

For example, the supplementary information CI may be recorded in association with an action taken with respect to the provision candidate participant by the recipient candidate participant.

In this example, a supplementary information recording unit 1014, a reward exchange possibility determination unit 1015, and an invalid point determination unit 1016 are added to the block diagram illustrated in Fig. 3.

The supplementary information recording unit 1014 is provided independently of the first remaining point number recording unit 1003 and the second remaining point number recording unit 1004.

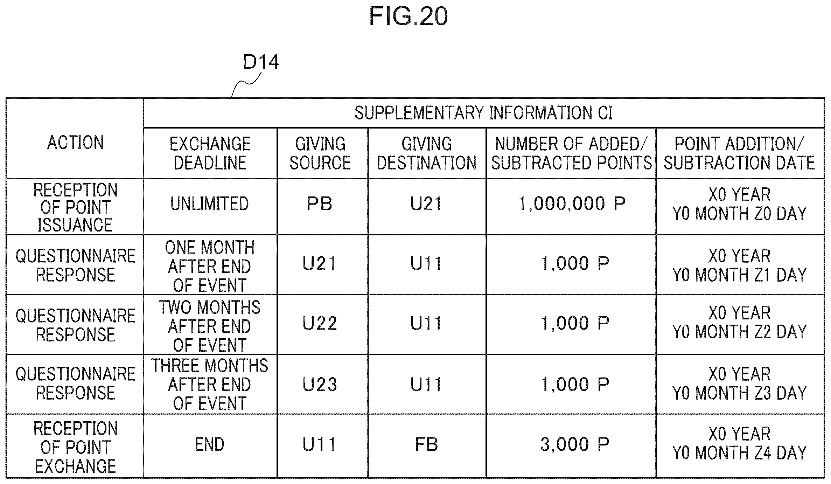

Fig. 20 is a diagram corresponding to Fig. 11, and illustrates contents of recording data D14 of the supplementary information recording unit 1014.

Each time a person involved in an event takes an action, the supplementary information recording unit 1014 records, in association with the action, supplementary information CI indicating the number of points according to the action, information specifying a giving destination 1 of the number of points and a giving source, and a giving time and an exchange deadline for the reward.

For example, in a similar manner to Fig. 7, each time the provision candidate participant U21 takes an action (point issuance reception) on the point issuing institution PB, in association with the action, the supplementary information CI indicating the number of points (1 million points P) corresponding to the action, the information specifying the provision candidate participant U21 as the giving destination of the number of points and the point issuing institution PB as the giving source, the giving time (X0 year Y0 month Z0 day), and the exchange deadline (unlimited) for the reward is recorded.

In a similar manner to Fig. 9, each time the recipient candidate participant U11 takes an action (responses to the questionnaires QA21, QA22, and QA23) with respect to the provision candidate participants U21, U22, and U23, the supplementary information CI indicating the number of points (1000 points P) according to the action, information specifying the recipient candidate participant U11 as a giving destination of the number of points and the provision candidate participants U21, U22, and U23 as giving sources, giving times (X0 year Y0 month Z1 day, X0 year Y0 month Z2 day, and X0 year Y0 month Z3 day), and exchange deadlines for the rewards (within one month after the end of the event A1, within two months after the end of the event A1, and within three months after the end of the event A1) is recorded in association with the action.

In a similar manner to Fig. 11, each time the recipient candidate participant U11 takes an action (point exchange reception) on the reward distribution institution FB, the supplementary information CI indicating the number of points (3000 points P) according to the action, information specifying the recipient candidate participant U11 as a giving destination of the number of points, the reward distribution institution FB as a giving source, a giving time (X0 year Y0 month Z4 day), and the exchange deadline for the reward (exchange deadline end) is recorded in association with the action.

The reward exchange possibility determination unit 1015 determines whether or not the points of the number of remaining points (3000 points P) recorded in the second remaining point number recording unit 1004 are exchangeable for the reward based on the supplementary information CI.

The reward distribution unit 1005 converts points of the number of points received from the recipient candidate participant within a range determined to be exchangeable for the reward by the reward exchange possibility determination unit 1015 among the number of remaining points recorded in the second remaining point number recording unit 1004 into a reward at a predetermined exchange rate, and distributes a reward corresponding to the number of received points to the recipient candidate participant.

Here, although the exchange deadline for the reward set in the supplementary information CI at the time of issuing the points is "unlimited", the supplementary information CI indicating that the exchange deadline for the reward is "within one month after the end of the event A1", "within two months after the end of the event A1", and "within three months after the end of the event A1" is associated with the action of responding to the respective questionnaires QA21, QA22, and QA23.

In a case in which a time point at which the reward exchange is received is "within one month after the end of event A1", the points of the number of points 1000 P associated with the action of responding to the questionnaires QA21, QA22, and QA23 are determined to be exchangeable for the rewards. Therefore, in a case in which the exchange of 3000 P points is received, 3000 P is exchanged for a reward.

The second remaining point number recording unit 1004 records the new number of remaining points, that is, 0 points, obtained by subtracting the number of points 3000 P converted into the reward from the current number of remaining points 3000 P associated with the recipient candidate participant U11 whose points have been converted into the reward.

However, in a case in which the time point at which the reward exchange is received is "within two months after one month from the end of event A1", the points of the number of points 1000 P associated with the action of responding to the questionnaire QA21 are determined not to be exchangeable for the reward. Therefore, the reception of the exchange of 1000 P points among 3000 P is rejected.

In addition, the invalid point determination unit 1016 determines the number of points that become invalid among the number of remaining points recorded in the second remaining point number recording unit 1004 based on the supplementary information CI in which the exchange deadline is "one month after the end of event A1", "two months after the end of event A1", and "three months after the end of event A1".

For example, at a time point at which the time elapses without the reward exchange or the like and "one month after the end of event A1" is exceeded, the points of the number of points 1000 P associated with the action of responding to the questionnaire QA21 are determined to be invalid.

The second remaining point number recording unit 1004 records the new number of remaining points, that is, 2000 points, obtained by subtracting the number of invalid points 1000 P from the current number of remaining points 3000 P associated with the recipient candidate participant U11 whose point is determined to be invalid by the invalid point determination unit 1016.

In a case in which the time point at which the reward exchange is received is "within three months from two months after the end of the event A1", it is determined that the reward exchange is not permitted for the points of the number of points 1000 P associated with the action of responding to the questionnaire QA22 in addition to the points of the number of points 1000 P associated with the action of responding to the questionnaire QA21. Therefore, the reception of the exchange of 2000 P points among 3000 P is rejected.

In addition, the invalid point determination unit 1016 determines the number of points that become invalid among the number of remaining points recorded in the second remaining point number recording unit 1004 based on the supplementary information CI in which the exchange deadline is "one month after the end of event A1", "two months after the end of event A1", and "three months after the end of event A1".

For example, at a time point at which the time elapses without the reward exchange or the like and "two months after the end of event A1" is exceeded, the points of the number of points 1000 P associated with the action of responding to the questionnaire QA22 in addition to the points of the number of points 1000 P associated with the action of responding to the questionnaire QA21 are determined to be invalid.

The second remaining point number recording unit 1004 records the new number of remaining points, that is, 1000 points, obtained by subtracting the number of invalid points 1000 P from the current number of remaining points 2000 P associated with the recipient candidate participant U11 whose point is further determined to be invalid by the invalid point determination unit 1016.

In a case in which the time point at which the reward exchange is received is "after three months from the end of event A1", the points of the number of points 1000 P associated with the action of responding to the questionnaire QA23 are determined not to be exchangeable for the reward in addition to the points of the number of points 1000 P associated with the action of responding to the questionnaire QA21 and the points of the number of points 1000 P associated with the action of responding to the questionnaire QA22. Therefore, the reception of the exchange of all points of 3000 P is rejected.

In addition, the invalid point determination unit 1016 determines the number of points that become invalid among the number of remaining points recorded in the second remaining point number recording unit 1004 based on the supplementary information CI in which the exchange deadline is "one month after the end of event A1", "two months after the end of event A1", and "three months after the end of event A1".

For example, at a time point at which the time elapses without the reward exchange or the like and "three months after the end of event A1" is exceeded, the points of the number of points 1000 P associated with the action of responding to the questionnaire QA23 are determined to be invalid in addition to the points of the number of points 1000 P associated with the action of responding to the questionnaire QA21 and the points of the number of points 1000 P associated with the action of responding to the questionnaire QA22.

The second remaining point number recording unit 1004 records the new number of remaining points, that is, 0 points, obtained by subtracting the number of invalid points 1000 P from the current number of remaining points 1000 P associated with the recipient candidate participant U11 whose point is further determined to be invalid by the invalid point determination unit 1016.

The supplementary information CI may be recorded in association with the state change of the points acquired by the person involved in the event.

The supplementary information CI can include usage restriction information of the acquired points.

In this example, the supplementary information recording unit 1014 and a point usage possibility determination unit 1017 are added to the block diagram illustrated in Fig. 3.

The point state change includes "points have been acquired", "points have been used", "points have been invalidated", "a point Pa of another type different from a point P exchangeable for a reward has been acquired" as described later, "an external point Pb different from an internal point P has been acquired" as described later, and the like.

The different type of point Pa is a different type of point given to an action on the event content separately from the point P given to the questionnaire response. For example, business card exchange at an exhibition booth, participation in a session, and the like may be provided.

The external point Pb is a point managed by an external point management system.

Examples of a form of point acquisition include point purchase using currency or the like, point acquisition in response to an action, and the like. Examples of a form of using the point include an exchange for a reward, an exchange for another type of point (for example, the external point Pb), a refund, and the like.

The supplementary information CI includes usage restriction information of the acquired points.

Examples of the usage restriction information include an exchange deadline for the point and the reward, an exchange rate for the reward, an exchange deadline for another type of point Pa, an exchange rate for another type of point Pa, an exchange deadline for the external point Pb, an exchange rate for the external point Pb, a restriction on the use of the point (limited to provision of a questionnaire and the like), and the like.

The supplementary information recording unit 1014 records the supplementary information CI including the usage restriction information of the point in association with the point state change.

The point usage possibility determination unit 1017 determines whether or not the point is available based on the supplementary information CI.

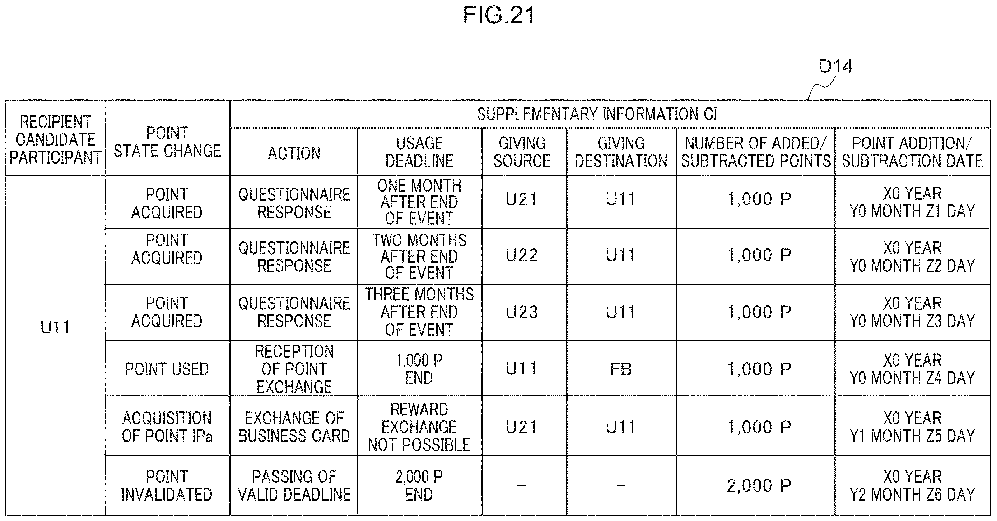

Fig. 21 illustrates contents of recording data D14 of the supplementary information recording unit 1014.

The supplementary information recording unit 1014 records the supplementary information CI indicating the action taken by the person involved in the event, the usage restriction information, the information specifying the giving destination of the number of points and the giving source, and the number of added/subtracted points and the point addition/subtractions date, in association with the state change of the point acquired by the person involved in the event (for example, the recipient candidate participant U11).

For example, in a similar manner to Fig. 9, in association with the state change (point acquisition) of the points acquired by the recipient candidate participant U11, the supplementary information CI indicating the action (responses to the questionnaires QA21, QA22, and QA23), the usage restriction information (exchange deadlines are within one month after the end of event A1, within two months after the end of event A1, and within three months after the end of event A1, respectively), the information specifying the recipient candidate participant U11 as the giving destination of the number of points and the provision candidate participants U21, U22, and U23 as the giving sources, and the number of added/subtracted points (1000 points P), and the point addition/subtraction time (X0 year Y0 month Z1 day, X0 year YO month Z2 day, and X0 year Y0 month Z3 day) is recorded.

In a similar manner to Fig. 11, in association with the state change (point usage) of the points acquired by the recipient candidate participant U11, the supplementary information CI indicating the action (point exchange reception for 1000 P), the usage restriction information (the end of the exchange for 1000 points P (the used 1000 points P are not available thereafter)), the information specifying the reward distribution institution FB as the giving destination of the number of points and the recipient candidate participant U11 as the giving source, the number of added/subtracted points (1000 points P), and the point addition/subtraction time (X0 year Y0 month Z4 day) is recorded.

The point usage possibility determination unit 1017 determines whether or not the points are available based on the supplementary information CI.

In a case in which the time of the point exchange reception (X0 year Y0 month Z4 day) falls within the exchange deadline (within one month after the end of the event A1, within two months after the end of the event A1, and within three months after the end of the event A1) indicated by the usage restriction information of the points for 1000 P, it is determined that the point use (exchange for the reward) is possible.

The reward distribution unit 1005 converts points (1000 P) of the number of points received within a range in which the point usage possibility determination unit 1017 determines that the point use is possible among the number of remaining points that is recorded in the second remaining point number recording unit 1004 and is associated with the recipient candidate participant U11, into a reward at a predetermined exchange rate, and distributes a reward corresponding to the number of received points (1000 P) to the recipient candidate participant U11.

In association with the state change of the points acquired by the recipient candidate participant U11 (the point Pa of another type different from the point P exchangeable for the reward is acquired), the supplementary information CI indicating an action (business card exchange),

the usage restriction information (exchange for the reward is not possible), the information specifying the recipient candidate participant U11 as the giving destination of the number of points and the provision candidate participant U21 as the giving source, the number of added/subtracted points (1000 points Pa), and a point addition/subtraction time (X0 year Y0 month Z5 day) is recorded.

The point usage possibility determination unit 1017 determines whether or not the points are available based on the supplementary information CI.

For example, at a time point at which the time elapses without the reward exchange or the like and "three months after the end of event A1" is exceeded, the number of remaining points recorded in the second remaining point number recording unit 1004 associated with the recipient candidate participant U11, that is, all the points of the number of points 2000 P that is exchangeable for the reward are determined to be invalid. The number of remaining points recorded in the third remaining point number recording unit 1008, that is, another type of 1000 points Pa that is not exchangeable for the reward is maintained as it is without being invalidated.

The second remaining point number recording unit 1004 records the new number of remaining points obtained by subtracting the number of used points 2000 P from the current number of remaining points 2000 P associated with the recipient candidate participant U11, that is, 0 points P, and records 1000 points Pa for another type of points Pa that is not exchangeable for a reward.

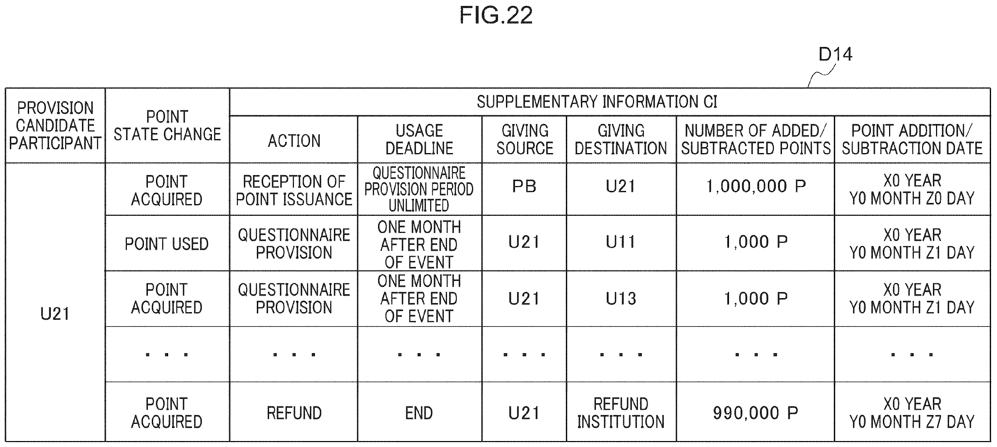

Fig. 22 illustrates contents of the recording data D14 of the supplementary information recording unit 1014.

The supplementary information recording unit 1014 records the supplementary information CI indicating the action taken by the person involved in the event, the usage restriction information, the information specifying the giving destination of the number of points and the giving source, and the number of added/subtracted points and the point addition/subtractions date, in association with the state change of the point acquired by the person involved in the event (for example, the provision candidate participant U21).

For example, in a similar manner to Fig. 7, in association with the state change (point acquisition) of the points acquired by the provision candidate participant U21, the supplementary information CI indicating the action (point issuance reception), the usage restriction information (limited to provision of a questionnaire, exchange deadline is unlimited), the information specifying the provision candidate participant U21 as the giving destination of the number of points and the point issuing institution PB as the giving source, the number of added/subtracted points (1 million points P), and the point addition/subtraction time (X0 year Y0 month Z0 day) is recorded.

In a similar manner to Fig. 9, in association with the state change (point use) of the points acquired by the provision candidate participant U21, the supplementary information CI indicating the action (provision of the questionnaire QA21), the usage restriction information (within one month after the end of the event A1), the information specifying the recipient candidate participants U11 and U12 as the giving destinations of the number of points and the provision candidate participant U21 as the giving source, the number of added/subtracted points (1000 points P), and the point addition/subtraction time (X0 year YO month Z1 day) is recorded.

The point usage possibility determination unit 1017 determines whether or not the points are available based on the supplementary information CI.

The provision candidate participant U21 may request a refund from the refund institution.

The supplementary information CI includes usage restriction information indicating that usage is unlimited. Therefore, in a case in which a refund is received on X0 year YO month Z7 day, it is determined that the point of the refund can be used.

The refund unit 1016 converts points (990000 P) of the number of points received within a range in which the point usage possibility determination unit 1017 determines that the point usage is possible among the number of remaining points that is recorded in the first remaining point number recording unit 1003 and is associated with the provision candidate participant U21, into a reward at a predetermined exchange rate, and refunds currency corresponding to the number of received points (990000 P) to the provision candidate participant U21.

In association with the state change (point usage) of the point acquired by the provision candidate participant U21, the supplementary information CI indicating the action (refund reception), the usage restriction information (end (the used point is not available thereafter)), the information specifying the refund institution as the giving destination of the number of points and the provision candidate participant U21 as the giving source, the number of added/subtracted points (990000 P), and the point addition/subtraction time (X0 year Y0 month Z7 day) is recorded.

The first remaining point number recording unit 1003 records the new number of remaining points obtained by subtracting the number of used points 990000 P from the current number of remaining points 990000 P associated with the provision candidate participant U21, that is, 0 points P.

### (Second Example)

The remaining number of points can be converted into currency or the like and the converted points can be refunded to the provision candidate participant.

Reception of the refund can be performed on the screen of the display device 17 of the terminal 120 on the provision candidate participant U21 side in a similar manner to Figs. 10A and 10B.

For example, in a case in which the number of remaining points N1 associated with the provision candidate participant U21 is 500000 points P, the refund unit 1006 can convert points of the number of points (for example, 500000 points P) received in the range of the number of remaining points (500000 points P) from the provision candidate participant U21 into currency at the third exchange rate R3 and refund the converted currency. The refund institution may also serve as a reward distribution institution. A refund institution-side terminal can also serve as the reward distribution institution-side terminal 100B.

As long as the refund has a value corresponding to the number of received points, the refund may be performed in the form of digital points, a prepaid card, an article, or a combination of two or more thereof, in addition to currency.

A method of performing refund by the refund unit 1006 can be freely set. In the case of tangible currency, the currency may be transferred to an account designated by the provision candidate participant U21, or may be delivered to a place designated by the provision candidate participant U21 via a delivery company.

In a case in which the refund is a prepaid card or an article, the refund may be delivered to a place designated by the provision candidate participant U21 via the delivery company.

In a case in which the refund is digital points, a serial code, a URL, or the like specifying the right to receive the digital points can be displayed on a refunded screen (not illustrated) similar to the reward distributed screen 506 illustrated in Fig. 10B.

It is also possible to issue points including an issuance fee in advance.

In this case, the first exchange rate R1 (for example, 1.5 yen/1 point) is set to be higher than the third exchange rate R3 (for example, 1 yen/1 point). The point issuing unit 1001 issues points including the issuance fee corresponding to a difference between the third exchange rate R3 and the first exchange rate R1 in advance, whereby the point issuing institution PB and a refund institution RB as the event operating institution can collect the operating cost of the event A1 even in a case in which the refund is performed.

In a case in which a transfer fee and a delivery fee are required for the refund, the refund unit 1006 may refund an amount (for example, 499000 yen) obtained by subtracting the transfer fee or/and the delivery fee or/and the transfer/delivery fee (for example, 1000 yen) from the points P of the number of received points (for example, 500000 P).

### (Third Example)

Another type of points Pa given to an action on the event content separately from the point P given to the questionnaire response can also be set.

The action recording unit 1007 records an action for an event content associated with each provision candidate participant in association with each recipient candidate participant.

The event content is, for example, an exhibit at an event, a session held at an event, a seminar, or the like. The action for the event content is business card placement, business card exchange, inquiry for exhibits, session participation, seminar participation, and the like.

For example, in a case in which the recipient candidate participant U11 takes an action of placing a business card in the exhibit booth of the provision candidate participant U21, it is recorded that the points Pa of the number of points (1000 points Pa) as a reward corresponding to the action of placing a business card are given from the provision candidate participation U21 to the recipient candidate participant U11.

In the similar manner to Figs. 8A, 8B, and 9, the third remaining point number recording unit 1008 records the current number of remaining points Pa and the supplementary information CI in association with each recipient candidate participant U11.

For example, in a case in which the recipient candidate participant U11 takes an action of placing a business card in exhibit booths of the provision candidate participants U21, U22, and U23 on X0 year YO month Z1 day, in a similar manner to Fig. 9, the third remaining point number recording unit 1008 records remaining point number recording data including supplementary information CI indicating the current number of remaining points of 3000 points Pa and indicating that the point number of 1000 points Pa is received from the provision candidate participant U21 on X0 year YO month Z1 day, the point number of 1000 points Pa is received from the provision candidate participant U22 on X0 year YO month Z1 day, and the point number of 1000 points Pa is received from the provision candidate participant U23 on X0 year Y0 month Z1 day, in association with the recipient candidate participant U11.

The point Pa recorded in the third remaining point number recording unit 1008 is an honorary point and cannot be exchanged for a reward unlike the point P recorded in the second remaining point number recording unit 1004. However, it is also possible to perform point type conversion on the points Pa recorded in the third remaining point number recording unit 1008 with limitation to the points P recorded in the second remaining point number recording unit 1004.

The point type conversion receiving unit 1009 receives point type conversion of points Pa recorded in the third remaining point number recording unit 1008 from the recipient candidate participant U11 into points recorded in the second remaining point number recording unit 1004.

In a case in which the point type conversion is received by the point type conversion receiving unit 1009, the point type conversion processing unit 1010 converts the points Pa recorded in the third remaining point number recording unit 1008 into the points P recorded in the second remaining point number recording unit 1004 at a fourth exchange rate R4, and adds the converted number of conversion points to the current number of remaining points N2 of the second remaining point number recording unit 1004.

The reception of the point type conversion and the confirmation of the point type conversion can be performed on the screen of the display device 17 of the terminal 130 on the recipient candidate participant U11 side in a similar manner to Figs. 10A and 10B.

Here, the fourth exchange rate R4 can be set to be lower than the second exchange rate R2. For example, assuming that the second exchange rate R2 is 1 yen/1 point, the fourth exchange rate R4 can be set to 0.5 yen/1 point. Therefore, in a case in which the number of points Pa recorded in the third remaining point number recording unit 1008 is 3000 points Pa, as a result of the point type conversion, the second remaining point number recording unit 1004 adds the conversion points P of 1500 points P to the current number of remaining points N2.

The second remaining point number recording unit 1004 records an addition time of the number of conversion points (for example, 1500 points P) in association with the number of conversion points (for example, 1500 points P) each time the number of conversion points (for example, 1500 points P) is added to the current number of remaining points N2 of the second remaining point number recording unit 1004. For example, assuming that the recipient candidate participant U11 performs point type exchange to the points P of the number of points of 1500 points P on X0 year YO month Z1 day, the second remaining point number recording unit 1004 records supplementary information CI indicating that the number of conversion points of 1500 points P has been subjected to the point type conversion on X0 year Y0 month Z1 day, in association with the recipient candidate participant U11.

An upper limit value of the number of points of the points P subjected to point type exchange or an exchange deadline may be limited. For example, the upper limit of the number of points P subjected to the point type exchange can be limited to 10000 points P. The deadline of the point type exchange can be limited to a predetermined time X0 year YO month Z5 day.

Therefore, the point type conversion receiving unit 1009 can reject reception of the point type exchange of the number of points exceeding the upper limit value being 10,000 points P and/or reception of the point type conversion at a time exceeding the exchange deadline X0 year YO month Z5 day.

In a case of rejecting the reception of the point type exchange corresponding to the number of points exceeding the upper limit value or/and the point type conversion at the time exceeding the exchange deadline, the point type conversion receiving unit 1009 may display a warning of the rejection on the screen of the display device 17 of the terminal 130 on the recipient candidate participant side.

### (Fourth Example)

Only in a case in which it is determined that the number of points n2 (for example, 1000 points P) corresponding to the reward for the questionnaire response can be given to the recipient candidate participant, the addition/subtraction processing of the number of points n2 corresponding to the reward may be executed by the first remaining point number recording unit 1003 and the second remaining point number recording unit 1004.

In a case in which the questionnaire response is received by the questionnaire response receiving unit 1002, the determination unit 1011 compares the number of remaining points N1 recorded in the first remaining point number recording unit 1003 with the number of points n2 (for example, 1000 points P) associated with the questionnaire response, and determines whether or not the number of points n2 (for example, 1000 points P) associated with the questionnaire response can be given to the recipient candidate participant U11.

In a case in which it is determined that the number of remaining points N1 associated with the provision candidate participant U21 is equal to or more than the number of points n2 (for example, 1000 points P) and the number of points n2 (for example, 1000 points P) associated with the questionnaire response can be given to the recipient candidate participant U11, the point addition/subtraction processing unit 1012 executes addition/subtraction processing of subtracting the number of points n2 (for example, 1000 points P) associated with the questionnaire response from the current number of remaining points N1 recorded in the first remaining point number recording unit 1003 and adding the number of points n2 to the current number of remaining points N2 recorded in the second remaining point number recording unit 1004. In a case in which it is determined that the number of remaining points N1 associated with the provision candidate participant U21 is less than the number of points n2 (for example, 1000 points P) and the number of points n2 (for example, 1000 points P) associated with the questionnaire response cannot be given to the recipient candidate participant U11, the point addition/subtraction processing unit 1012 executes suspension processing of suspending the addition/subtraction processing.

In a case in which the addition/subtraction processing is suspended, currency (for example, 1500 yen) corresponding to the number of points n2 (for example, 1000 points P) may be withdrawn from an advance payment account registered in advance and applied to the reward to be given to the recipient candidate participant.

The advance payment account registration unit 1013 registers the advance payment account in association with the provision candidate participant U21. Registration of the advance payment account and deposit into the account can be performed on the screen of the display device 17 of the terminal 120 on the provision candidate participant U21 side, in a similar manner to Figs. 10A and 10B. The advance payment account institution-side terminal 110 manages the advance payment account.

In a case in which the suspension processing is executed, the point addition/subtraction processing unit 1012 executes replacement request processing for withdrawing currency (for example, 1500 yen) corresponding to the number of points n2 (for example, 1000 points P) associated with the questionnaire response from the advance payment account on the condition that the withdrawable currency is input to the advance payment account associated with the provision candidate participant U21 on which the suspension processing has been performed. As a result, currency (for example, 1500 yen) corresponding to the number of points n2 (for example, 1000 points P) is withdrawn from the advance payment account and applied to the reward (for example, 1000 points P) to be given to the recipient candidate participant U11. At the same time, addition/subtraction processing of subtracting the number of points n2 (for example, 1000 points P) associated with the questionnaire responses from the current number of remaining points N1 recorded in the first remaining point number recording unit 1003 and adding the number of points n2 to the current number of remaining points N2 recorded in the second remaining point number recording unit 1004 is executed.

A warning according to the number of times of a questionnaire with a reward being able to be provided can be displayed on the screen of the terminal 130 on the recipient candidate participant side.

For each provision candidate participant, the questionnaire provision count calculation unit 1014 compares the number of remaining points N1 recorded in the first remaining point number recording unit 1003 with the number of points n2 (for example, 1000 points P) associated with the questionnaire response, and calculates the number of times of a questionnaire with a reward being able to be provided.

The number of times of the questionnaire with reward being able to be provided can be displayed on, for example, the reward distribution screen 505 illustrated in Fig. 10A. In a case in which the number of remaining points N1 associated with the provision candidate participant U21 is, for example, 10500 points P and the number of points n2 associated with the questionnaire response is, for example, 1000 points P, a provision count display portion indicating "the number of times that the provision candidate participant U21 can provide the questionnaire with a reward is 10." is displayed on the reward distribution screen 505 illustrated in Fig. 10A.

In a case in which the number of times of the questionnaire with the reward being able to be provided is equal to or less than a predetermined number of times, for example, 3 times, the warning display unit 1015 displays a warning for this case on the screen of the terminal 130 on the recipient candidate participant side. The warning can be displayed on the reward distribution screen 505 illustrated in Fig. 10A, for example. In a case in which the number of remaining points N1 associated with the provision candidate participant U21 is, for example, 3500 points P and the number of points n2 associated with the questionnaire response is, for example, 1000 points P, a warning display portion indicating "the number of times that the provision candidate participant U21 can provide the questionnaire with a reward is the remaining 3." is displayed on the reward distribution screen 505 illustrated in Fig. 10A. By, for example, blinking the warning display portion or displaying the warning display portion in a warning color (for example, red display) different from the ground color of the screen, it is possible to inform the recipient candidate participant of the warning content.

In a case in which the questionnaire with the reward cannot be provided, a warning indicating that the provided questionnaire does not have a reward can be displayed. In a case in which the number of remaining points N1 associated with the provision candidate participant U21 is, for example, 500 points P and the number of points n2 associated with the questionnaire response is, for example, 1000 points P, a warning display portion indicating "the questionnaire provided by the provision candidate participant U21 does not have a reward" is displayed on the reward distribution screen 505 illustrated in Fig. 10A. By, for example, blinking the warning display portion or displaying the warning display portion in a warning color (for example, red display) different from the ground color of the screen, it is possible to inform the recipient candidate participant of the warning content.

### (Fifth Example)

An implementation in which points acquired in response to the questionnaire response are exchangeable for a product or service provided by the event cooperation institution instead of being exchanged for a reward can be made.

The event cooperation institution is, for example, a local industrial company that is a member of the Chamber of Commerce and Industry in the venue of the event (academic lecture of an academic society). The product or service provided by the event cooperation institution is, for example, a local product.

The points acquired in response to the questionnaire response can be exchanged for a product or service provided by the event cooperation institution on the screen of the display device 17 of the terminal 130 on the recipient candidate participant U11 in the similar manner to Figs. 10A and 10B.

In a case in which the exchange between the points acquired in response to the questionnaire response and the product or service provided by the event cooperation institution is received, the points P (for example, 3000 points P) of the number of points N3 received in a range of the number of remaining points N2 recorded in the second remaining point number recording unit 1004 from the recipient candidate participant U11 are exchanged for the product or service provided by the event cooperation institution at a fifth exchange rate R5, and the product or service provided by the event cooperation institution is distributed to the recipient candidate participant U11.

The fifth exchange rate R5 is, for example, 1.2 yen/1 point. The fifth exchange rate R5 (for example, 1.2 yen/1 point) can be set to be higher than the second exchange rate R2 (for example, 1 yen/1 point). As a result, the exchange rate for the product or service provided by the event cooperation institution increases, and the economy of the region where the event is held is activated.

The exchange time for the product or service provided by the event cooperation institution can be limited. For example, the exchange for the product or service provided by the event cooperation institution is limited to the holding period being X0 year Y0 month Z1 day to X0 year Y0 month Z3 day of the event A1 to which the point to be exchanged is given.

In the similar manner to Figs. 8A, 8B, and 9, the second remaining point number recording unit 1004 records the current number of remaining points P and the supplementary information CI in association with each recipient candidate participant U11. Information indicating an exchangeable exchange time for a product or a service provided by the event cooperation institution is added to the supplementary information CI.

For example, in a case in which the recipient candidate participant U11 responds to a questionnaire provided by the provision candidate participant U21 on X0 year YO month Z1 day, in the similar manner to Fig. 9, the second remaining point number recording unit 1004 records the supplementary information CI indicating that the number of points of 1000 points P is received from the provision candidate participant U21 on X0 year Y0 month Z1 day, and that the exchangeable time between the points P of the number of points 1000 and the product or service provided by the event cooperation institution is only until the holding end date being X0 year YO month Z3 day of the event A1, in association with the recipient candidate participant U11. Similarly, in a case in which the recipient candidate participant U11 responds to a questionnaire provided by the provision candidate participant U22 on X0 year YO month Z2 day, the second remaining point number recording unit 1004 records the supplementary information CI indicating that points P of the number of points 1000 are received from the provision candidate participant U22 on X0 year Y0 month Z2 day, and that the exchangeable time between the points P of the number of points 1000 and the product or service provided by the event cooperation institution is only until the holding end date being X0 year Y0 month Z3 day of the event A1, in association with the recipient candidate participant U11. Similarly, in a case in which the recipient candidate participant U11 responds to a questionnaire provided by the provision candidate participant U23 on X0 year Y0 month Z3 day, the second remaining point number recording unit 1004 records the supplementary information CI indicating that the points P of the number of points 1000 are received from the provision candidate participant U23 on X0 year Y0 month Z3 day, and that the exchangeable time between the points P of the number of points 1000 and the product or service provided by the event cooperation institution is only until the holding end date being X0 year YO month Z3 day of the event A1, in association with the recipient candidate participant U11.

The designated period may be used instead of the event holding period. For example, the exchange between the points P acquired in response to the questionnaire response and the product or service provided by the event cooperation institution may be limited to a specific time (for example, X0 year YO month Z5 day) after the end of the event A1 to which the points P as an exchange target are given.

As a result, a rate of exchanging for the product or service provided by the event cooperation institution increases during the event holding period, and the economy of the region where the event is held is activated.

The exchange between the points P acquired in response to the questionnaire response and the reward distributed by the reward distribution unit 1005 may also be limited to the holding period (for example, X0 year YO month Z1 day to X0 year YO month Z3 day) of the event A1 to which the points P as the exchange target are given or a specific time after the end of the event (for example, X0 year YO month Z5 day).

### (Sixth Example)

A time limit or a numerical limit may be set for the exchange between points and rewards. In a case in which the number of points intended to be acquired exceeds a prescribed number or in a case in which points are intended to be illegally acquired, reception of a questionnaire response or reception of exchange between points and rewards can be rejected.

In the similar manner to Figs. 5A, 5B, and 7, the first remaining point number recording unit 1003 records the current number of remaining points P and the supplementary information CI in association with each of the provision candidate participants U21, U22, and U23.

That is, each time the number of points n1 is added to the current number of remaining points N1 of the first remaining point number recording unit 1003, the first remaining point number recording unit 1003 records the supplementary information CI indicating the giving time of the number of points n1 and/or the reward exchange deadline in association with the number of points n1.

For example, the supplementary information CI including the giving time being X0 year Y0 month Z0 day is recorded in association with the points P of the number of points n1 (for example, 1 million points P). The supplementary information CI including the reward exchange deadline being X0 year YO month Z5 day is recorded in association with the points P of the number of points n1 (for example, 1 million points P). The supplementary information CI is taken over even in a case in which the points P of the number of points n1 (for example, 1 million points P) are given to the recipient candidate participant.

That is, each time the number of points n2 (for example, 1000 points P) is subtracted from the current number of remaining points N1 of the first remaining point number recording unit 1003, the first remaining point number recording unit 1003 records the information specifying the recipient candidate participant (for example, U11) as the giving destination of the number of points n2 (for example, 1000 points P) and the provision candidate participant (for example, U21) as the giving source or/and the supplementary information CI indicating the giving time (giving time of the point issuing institution PB being X0 year Y0 month Z0 day and giving time of the provision candidate participant U21 being X0 year YO month 01 day) or/and the reward exchange deadline (X0 year YO month Z5 day) in association with the number of points n2 (for example, 1000 points P).

Each time the number of points n2 (for example, 1000 points P) is added to the current number of remaining points N2 of the second remaining point number recording unit 1004, the second remaining point number recording unit 1004 records the information specifying the provision candidate participant (for example, U21) as the giving source of the number of points n2 (for example, 1000 points P) and the recipient candidate participant (for example, U11) as the giving destination or/and the supplementary information CI indicating the giving time (giving time of the point issuing institution PB being X0 year YO month Z0 day and giving time of the provision candidate participant U21 being X0 year Y0 month 01 day) or/and the reward exchange deadline (X0 year Y0 month Z5 day) in association with the number of points n2 (for example, 1000 points P).

In a case in which an application for reception of exchange between points and rewards is made from the recipient candidate participant (for example, U11), the reward exchange possibility determination unit 1016 determines whether or not the points P of the number of points associated with the supplementary information CI can be exchanged for a reward C based on the supplementary information CI. Therefore, the deadline of the exchange between the points P and the reward C, for which the reception of the reward exchange has been applied, can be limited to a time (X0 year YO month Z5 day) after a predetermined period (for example, five days) has elapsed from the giving time being X0 year YO month Z0 day indicated in the supplementary information CI. The deadline of the exchange between the points P and the reward C, for which the reception of the reward exchange has been applied, can be limited to the reward exchange deadline being X0 year Y0 month Z5 day indicated in the supplementary information CI.

The reward distribution unit 1005 distributes a reward corresponding to the number of points received from the recipient candidate participant (for example, the U11) on the condition that it is determined that a reward should be given to the recipient candidate participant (for example, the U11). The reward distribution unit 1005 permits the reception of exchange between a reward C and points P (for example, 3000 points P) of the number of points N3 for which the reception has been applied by a time (X0 year Y0 month Z5 day) after a predetermined period (for example, five days) has elapsed from the giving time being X0 year Y0 month Z0 day indicated in the supplementary information CI and distributes the reward C, but rejects the reception of exchange between the reward C and the points P for which the reception has been applied at a time (for example, X0 year YO month Z6 day) exceeding the elapse (for example, X0 year YO month Z5 day) of the predetermined period (for example, five days later) from the giving time being X0 year YO month Z0 day indicated in the supplementary information CI, and does not distribute the reward C.

Similarly, the reward distribution unit 1005 permits the reception of exchange between a reward C and points P (for example, 3000 points P) of the number of points N3 for which the reception has been applied until the reward exchange deadline being X0 year Y0 month Z5 day indicated in the supplementary information CI and distributes the reward C, but rejects the reception of exchange between the reward C and the points P (for example, 3000 points P) of the number of points N3 for which the reception has been applied at a time (for example, X0 year YO month Z6 day) exceeding the reward exchange deadline being X0 year Y0 month Z5 day indicated in the supplementary information CI, and does not distribute the reward C.

Numeric limitations may be placed on reward exchange. The reward exchange reception for points acquired to exceed a prescribed number or points acquired illegally can be rejected.

Depending on the event, an upper limit value may be set for the number of points (reward amount) that can be acquired by one recipient candidate participant per event, or an upper limit value may be set for the number of times that one provision candidate participant can respond to a questionnaire with a reward. In such a case, in order to avoid reward distribution exceeding the upper limit value, a point according to a questionnaire response may be given to the recipient candidate participant on the condition of approval of the provision candidate participant or the event operating institution. In a state where the same recipient candidate participant illegally performs duplicate user registration, there may be an intention to illegally acquire the number of points exceeding the upper limit value. Even in such a case, in order to avoid illegal reward acquisition, a point according to a questionnaire response may be given to the recipient candidate participant on the condition of approval of the provision candidate participant or the event operating institution.

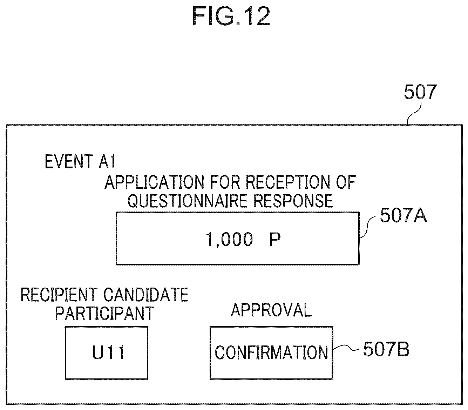

In a case in which the recipient candidate participant U11 presses the response confirmation button 503B on the questionnaire response reception screen 503 illustrated in Fig. 6A to apply for reception of the questionnaire response, an approval screen 507 illustrated in Fig. 12 is displayed on the screen of the display device 17 of the terminal 120 on the provision candidate participant U21 side.

On the approval screen 507, a reception application display portion 507A and an approval confirmation button 507B are displayed. A message indicating that there has been an application for reception of a questionnaire response from the recipient candidate participant U11 is displayed on the reception application display portion 507A. In a case in which an operation of pressing the approval confirmation button 507B is performed, the questionnaire response is received, the display screen of the display device 17 of the recipient candidate participant-side terminal 130 transitions to a questionnaire response received screen 504 illustrated in Fig. 6B, and points P of the number of points n2 (for example, 1000 points P) corresponding to the questionnaire response are given to the recipient candidate participant U11.

The provision candidate participant U21 can confirm, on the screen of the display device 17 of the terminal 120 on the provision candidate participant U21 side, the first remaining point number recording data D1 associated with the own provision candidate participant U21 or the second remaining point number recording data D2 associated with the recipient candidate participant U11 who has applied for reception of the questionnaire response.

Here, as an upper limit value of the number of questionnaire responses that can be given from one provision candidate participant, a response number upper limit value being one is set. The response number upper limit value can be freely set in accordance with the type of event or the like.

It is assumed that, at a time point at which reception of the questionnaire response from the recipient candidate participant U11 has been applied for, the first remaining point number recording data D1 associated with the own provision candidate participant U21 is in the state illustrated in Fig. 5A or the second remaining point number recording data D2 associated with the recipient candidate participant U11 is in the state illustrated in Fig. 8A. In this case, the number of questionnaire responses associated with the provision candidate participant U21 and the recipient candidate participant U11 is 0 and it can be determined that the number of responses does not reach the response number upper limit value (1). Therefore, the provision candidate participant U21 can determine that the application for the reception of the questionnaire response may be approved. In a case in which the operation of pressing the approval confirmation button 507B is performed, the questionnaire response receiving unit 1002 permits reception of the questionnaire response. As a result, the display screen of the display device 17 of the terminal 130 on the recipient candidate participant U11 side transitions to the questionnaire response received screen 504 illustrated in Fig. 6B, and points P of the number of points n2 (for example, 1000 points P) corresponding to the questionnaire response are given to the recipient candidate participant U11.

The point addition/subtraction processing unit 1012 executes addition/subtraction processing of subtracting the number of points n2 (for example, 1000 points P) associated with the questionnaire responses from the current number of remaining points N1 that is recorded in the first remaining point number recording unit 1003 and is associated with the provision candidate participant U21 and adding the number of points n2 to the current number of remaining points N2 that is recorded in the second remaining point number recording unit 1004 and is associated with the recipient candidate participant U11.

It is assumed that, at a time point at which reception of the questionnaire response from the recipient candidate participant U11 has been applied for, the first remaining point number recording data D1 associated with the own provision candidate participant U21 is in the state illustrated in Fig. 5B or the second remaining point number recording data D2 associated with the recipient candidate participant U11 is in the state illustrated in Fig. 8B. In this case, the number of questionnaire responses associated with the provision candidate participant U21 and the recipient candidate participant U11 is 1 and it can be determined that the number of responses has already reached the response number upper limit value (1). Therefore, the provision candidate participant U21 can determine that the application for the reception of the questionnaire response is not approved. The operation of pressing the approval confirmation button 507B is not performed, and the questionnaire response receiving unit 1002 rejects the reception of the questionnaire response. As a result, the display screen of the display device 17 of the terminal 130 on the recipient candidate participant U11 side does not transition to the questionnaire response received screen 504 illustrated in Fig. 6B, and a situation in which the points P of the number of points n2 (for example, 1000 points P) corresponding to the questionnaire response are newly given to the recipient candidate participant U11 does not occur.

In this example, the upper limit value is set for the number of times that one provision candidate participant can respond to a questionnaire with a reward. However, the example may be similarly applied to a case where an upper limit value is set for the number of questionnaires to which a recipient candidate participant can respond in a case in which one provision candidate participant provides a plurality of types of questionnaires.

Also in a case in which the same recipient candidate participant intends to illegally acquire points, such as a case where the same recipient candidate participant performs user registration in a duplicate manner, reception of a questionnaire response can be rejected without approving an application for the reception of the questionnaire response.

On the screen of the display device 17 of the terminal 120 on the provision candidate participant U21 side, the provision candidate participant U21 can refer to registration information of a recipient candidate participant U19 (user registration ID is U19) who has applied for reception of the questionnaire response this time and registration information of the recipient candidate participant U11 (user registration ID is U11) who has made a response to the questionnaire provided by the provision candidate participant U21 in the past. Here, by comparing the contents of the registration information, it is possible to determine that the recipient candidate participant U19 who has applied for reception of the questionnaire response is the same person as the recipient candidate participant U11 who has made a response to the questionnaire in the past. As a result, the provision candidate participant U21 can determine that the application for the reception of the questionnaire response from the recipient candidate participant U19 is not approved. The operation of pressing the approval confirmation button 507B is not performed, and the questionnaire response receiving unit 1002 rejects the reception of the questionnaire response. As a result, the display screen of the display device 17 of the terminal 130 on the recipient candidate participant U19 side does not transition from the questionnaire response reception screen 503 illustrated in Fig. 6A to the questionnaire response received screen 504 illustrated in Fig. 6B, and a situation in which the points P of the number of points n2 (for example, 1000 points P) corresponding to the questionnaire response are given to the recipient candidate participant U19 redundantly registered does not occur.

It can also be automatically determined whether or not the number of questionnaire responses of the recipient candidate participant who has applied for reception of the questionnaire response has reached the upper limit value of the number of questionnaire responses that can be given from one provision candidate participant. For example, at a time point at which reception of a questionnaire response has been applied for from the recipient candidate participant U11, the first remaining point number recording data D1 or the second remaining point number recording data D2 is read from the database, and the past number of questionnaire responses of the recipient candidate participant U11 is referred to. As a result, it is determined whether the past number of questionnaire responses of the recipient candidate participant U11 is equal to or less than the response number upper limit value, and processing of permitting the current reception of the questionnaire response from the recipient candidate participant U11 or processing of rejecting the current reception is executed. In a case in which it is determined that the past number of questionnaire responses of the recipient candidate participant U11 has reached the response number upper limit value, the questionnaire response receiving unit 1002 executes processing of rejecting reception of the questionnaire response.

Similarly, at a time point at which the reception of the questionnaire response has been applied for from the recipient candidate participant U19, user registration information of the recipient candidate participant U19 and the registration information of the recipient candidate participant (for example, the recipient candidate participant U11) who has given a questionnaire response in the past are read from the database, and the contents of the registration information are compared. As a result, it is determined whether or not the same person intends to respond to the questionnaire in a duplicate manner, and processing of rejecting reception of the questionnaire response from the recipient candidate participant U19 or processing of permitting the reception is executed. In a case in which it is determined that the application for the reception of the questionnaire response from the recipient candidate participant U19 is duplicated by the same person, the questionnaire response receiving unit 1002 executes processing of rejecting the reception of the questionnaire response.

Depending on the event, an upper limit value may be set for the number of questionnaire responses (reward amount) that can be given by one recipient candidate participant per event. For example, as an upper limit value of the number of questionnaires to which one recipient candidate participant can respond, the response number upper limit value being 100 is set. The response number upper limit value can be freely set in accordance with the type of event or the like. Also in this case, reception of the questionnaire response can be rejected or permitted by determining whether or not the response number upper limit value has been reached in the similar manner.

Whether or not the number of questionnaire responses (reward amount) that can be given by one recipient candidate participant per event has already reached the response number upper limit value can be determined, for example, by referring to the first remaining point number recording data D1 or the second remaining point number recording data D2 on the screen of the point issuing institution-side terminal 100A or the reward distribution institution-side terminal 100B which is the terminal on an event manager side, in the similar manner. In a case in which it is determined that the number of questionnaire responses (reward amount) that can be given by one recipient candidate participant per event has reached the response number upper limit value, the questionnaire response receiving unit 1002 executes processing of rejecting reception of the questionnaire response.

It can also be automatically determined whether or not the number of questionnaire responses of the recipient candidate participant who has applied for reception of the questionnaire response has reached the response number upper limit value of the number of questionnaire responses that can be given by one recipient candidate participant per event. For example, at a time point at which reception of a questionnaire response has been applied for from the recipient candidate participant U11, the first remaining point number recording data D1 or the second remaining point number recording data D2 is read from the database, and the past number of questionnaire responses of the recipient candidate participant U11 is referred to. As a result, it is determined whether the past number of questionnaire responses of the recipient candidate participant U11 is equal to or less than the response number upper limit value, and processing of permitting the current reception of the questionnaire response from the recipient candidate participant U11 or processing of rejecting the current reception is executed. In a case in which it is determined that the past number of questionnaire responses of the recipient candidate participant U11 has reached the response number upper limit value, the questionnaire response receiving unit 1002 executes processing of rejecting reception of the questionnaire response.

Similarly, at a time point at which reception of reward distribution has been applied for from the recipient candidate participant U11, it may be determined whether or not the upper limit value of the number of responses of the questionnaire with a reward per event or/and the upper limit value of the number of questionnaire responses that can be given from one provision candidate participant have been reached.

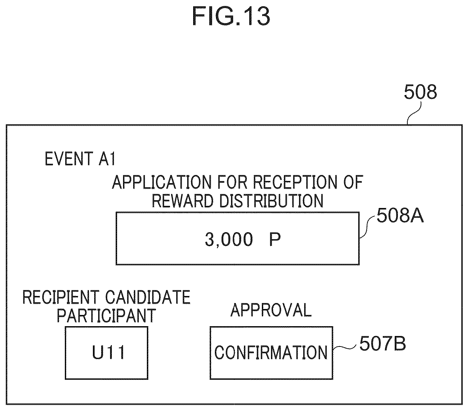

In a case in which the recipient candidate participant U11 presses the reward conversion confirmation button 505B on the reward distribution screen 505 illustrated in Fig. 10A, and reception of reward distribution is applied for, an approval screen 508 illustrated in Fig. 13 is displayed on the screen of the point issuing institution-side terminal 100A or the reward distribution institution-side terminal 100B which is the terminal on the event manager side.

On the approval screen 508, a reception application display portion 508A and an approval confirmation button 508B are displayed. A message indicating that there has been an application for reception of reward distribution from the recipient candidate participant U11 is displayed on the reception application display portion 508A. In a case in which an operation of pressing the approval confirmation button 508B is performed, the reward distribution is received, the display screen of the display device 17 of the recipient candidate participant-side terminal 130 transitions to a reward distributed screen 506 illustrated in Fig. 10B, and a distribution reward amount C (for example, 3000 yen) corresponding to the number of conversion points N3 (for example, 3000 points P) is distributed to the recipient candidate participant U11.

The event manager can confirm the first remaining point number recording data D1 or the second remaining point number recording data D2 associated with the recipient candidate participant U11 who has applied for reception of the questionnaire response, on the screen of the display device 17 of the point issuing institution-side terminal 100A or the reward distribution institution-side terminal 100B. In a case in which it is determined that the response number upper limit value has not been reached with reference to the first remaining point number recording data D1 or the second remaining point number recording data D2 associated with the recipient candidate participant U11 who has applied for reception of the questionnaire response, the operation of pressing the approval confirmation button 508B is performed. As a result, the reward distribution unit 1005 executes processing of permitting reception of reward distribution. The display screen of the display device 17 of the terminal 130 on the recipient candidate participant U11 side transitions to the reward distributed screen 506 illustrated in Fig. 10B, and the distribution reward amount C (for example, 3000 yen) corresponding to the number of conversion points N3 (for example, 3000 points P) is distributed to the recipient candidate participant U11.

In a case in which it is determined that the response number upper limit value has been reached with reference to the first remaining point number recording data D1 or the second remaining point number recording data D2 associated with the recipient candidate participant U11 who has applied for reception of the questionnaire response, the operation of pressing the approval confirmation button 508B is not performed. The reward distribution unit 1005 rejects distribution of the reward corresponding to the questionnaire response exceeding the response number upper limit value. As a result, the display screen of the display device 17 of the terminal 130 on the recipient candidate participant U11 side does not transition to the reward distributed screen 506 illustrated in Fig. 10B, and the distribution reward amount C (for example, 3000 yen) corresponding to the number of conversion points N3 (for example, 3000 points P) is not distributed to the recipient candidate participant U11.

Also in a case in which the same recipient candidate participant intends to illegally acquire points, such as a case where the same recipient candidate participant performs user registration in a duplicate manner, similarly, reward distribution can be rejected without approving an application for the reception of the reward distribution.

On the screen of the display device 17 of the point issuing institution-side terminal 100A or the reward distribution institution-side terminal 100B, the event manager can refer to the registration information of the recipient candidate participant U19 (user registration ID is U19) who has applied for the reward distribution this time and the registration information of the recipient candidate participant U11 (user registration ID is U11) who has responded to the questionnaire in the past. In a case in which the two are the same person, or the like, the event manager can determine not to approve the application for reception of the reward distribution from the recipient candidate participant U19. The operation of pressing the approval confirmation button 508B is not performed, and the reward distribution unit 1005 rejects the reception of the reward distribution. As a result, the display screen of the display device 17 of the terminal 130 on the recipient candidate participant U19 side does not transition to the reward distributed screen 506 illustrated in Fig. 10B from the reward distribution screen 505 illustrated in Fig. 10A, and the distribution reward amount C (for example, 3000 yen) corresponding to the number of conversion points N3 (for example, 3000 points P) is not distributed to the recipient candidate participant U19 redundantly registered.

It can also be automatically determined whether or not the response number upper limit value has been reached. For example, at a time point at which reception of the reward distribution has been applied for from the recipient candidate participant U11, the first remaining point number recording data D1 or the second remaining point number recording data D2 is read from the database, and the past number of questionnaire responses of the recipient candidate participant U11 is referred to. As a result, it is determined whether the past number of questionnaire responses of the recipient candidate participant U11 is equal to or less than the response number upper limit value, and processing of permitting the current reception of the reward distribution from the recipient candidate participant U11 or processing of rejecting the current reception is executed. In a case in which it is determined that the past number of questionnaire responses of the recipient candidate participant U11 has reached the response number upper limit value, the reward distribution unit 1005 executes processing of rejecting the reward distribution.

Similarly, at a time point at which the reception of the reward distribution has been applied for by the recipient candidate participant U19, user registration information of the recipient candidate participant U19 and the registration information of the recipient candidate participant (for example, the recipient candidate participant U11) who has given a questionnaire response in the past are read from the database, and the contents of the registration information are compared. As a result, it is determined whether or not the same person intends to respond to the questionnaire in a duplicate manner and acquire the reward, and processing of rejecting reception of the reward distribution from the recipient candidate participant U19 or processing of permitting the reception is executed. In a case in which it is determined that the application for reception of the reward distribution from the recipient candidate participant U19 has been duplicated by the same person, the reward distribution unit 1005 executes processing of rejecting the reward distribution.

### (Seventh Example)

The questionnaire in the event may be managed by the event operating institution or may be managed by another institution.

In a case in which a questionnaire in an event is managed by the event operating institution, as illustrated in Fig. 1, the server 200 that manages the questionnaire is provided in the event management system 101 that manages one event A1 or a plurality of events A1 to A10.

In the database of the server 200 of the event management system 101, questionnaires QA21, QA22, and QA23 associated with the respective provision candidate participants U21, U22, and U23 are stored to be displayable as the questionnaire response reception screen 503 on the screen of the display device 17 of the recipient candidate participant-side terminal 130. The display of the questionnaires QA21, QA22, and QA23 on the screen and the reception of the questionnaire responses are performed in the manner illustrated in Fig. 6A. The questionnaire response data D3 is stored in the database of the server 200 to be displayable on the screen of the display device 17 of the terminal 120 on the side of the provision candidate participants U21, U22, and U23 that have provided the questionnaires QA21, QA22, and QA23, in association with the recipient candidate participant (for example, U11) who has received the questionnaire response and the provision candidate participants U21, U22, and U23 that have provided the questionnaires.

### (Eighth Example)

The questionnaire in the event may be managed by an institution different from the event operating institution, for example, a questionnaire creating institution.

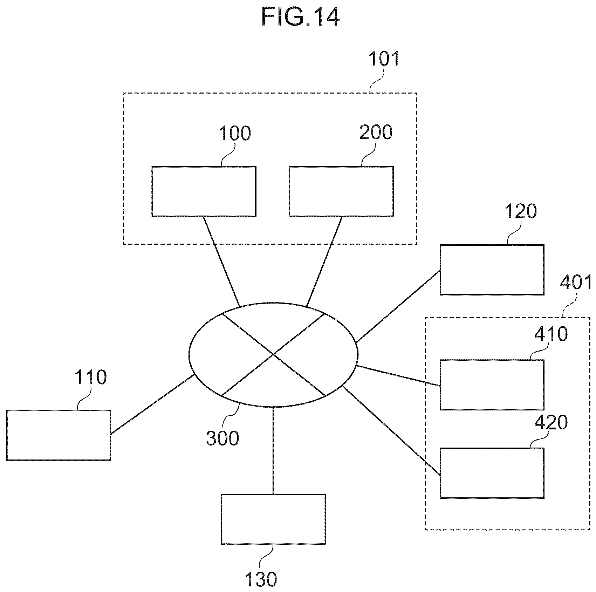

Fig. 14 illustrates a network configuration diagram according to an eighth example. Fig. 14 is a diagram corresponding to Fig. 1, and a questionnaire management system 401 is added to the network configuration illustrated in Fig. 1.

As illustrated in Fig. 14, the intra-event reward distribution system includes a point issuing institution-side terminal 100A and a reward distribution institution-side terminal 100B as the event operating institution-side terminal 100, a provision candidate participant-side terminal 120, a recipient candidate participant-side terminal 130, a server 200, a questionnaire creating institution-side terminal 410, a questionnaire creating institution-side server 420, and a network 300 that connects the terminals, the server 200, and the questionnaire creating institution-side server 420 so that data can be mutually transmitted and received between the terminals, the server 200, and the questionnaire creating institution-side server 420.

A management system including the questionnaire creating institution-side terminal 410 and the questionnaire creating institution-side server 420 is referred to as a questionnaire management system 401. For example, the questionnaire creating institution-side terminal 410 and the questionnaire creating institution-side server 420 are provided in a questionnaire creating institution different from the event operating institution. The questionnaire creating institution has an authority to access a database of the questionnaire creating institution-side server 420.

The hardware of the questionnaire creating institution-side terminal 410 and the questionnaire creating institution-side server 420 is configured similarly to the block diagram illustrated in Fig. 2.

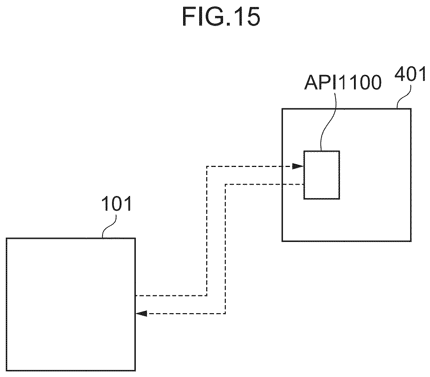

Fig. 15 illustrates a software cooperation relationship between the event management system 101 and the questionnaire management system 401.

The event management system 101 and the questionnaire management system 401 are different systems, and operation entities (management entities) of the systems are different. The management entity of the event management system 101 is an event operating institution, and the management entity of the questionnaire management system 401 is a questionnaire creating institution.

The questionnaire management system 401 cooperates with the event management system 101 via an API (application programming interface), and the API is read and performs a specific operation in response to a request from the event management system 101.

The questionnaire management system 401 has an API 1100 corresponding to the system configuration of the questionnaire management system 401.

In a case in which the API 1100 is called from the event management system 101 via the network 300, the questionnaire management system 401 provides the event management system 101 with a function of a specific processing operation of displaying the questionnaire response reception screen 503 to receive the questionnaire response or displaying the questionnaire response data D3. Data of the questionnaires QA21, QA22, and QA23 and the questionnaire response data D3 associated with each of the provision candidate participants U21, U22, and U23 are stored in the database of the questionnaire creating institution-side server 420 and are managed by the questionnaire management system 401.

For example, by performing a click operation to instruct a specific provision candidate participant U21 (for example, a display portion of "exhibiting company booth U21") on the screen of the display device 17 of the recipient candidate participant-side terminal 130, the API 1100 of the questionnaire management system 401 is called.

As a result, the data of display information of the questionnaire QA21 associated with the provision candidate participant U21 is read from the database of the questionnaire creating institution-side server 420, and the questionnaire response reception screen 503 of the questionnaire QA21 associated with the provision candidate participant U21 is displayed on the screen of the display device 17 of the recipient candidate participant-side terminal 130 as illustrated in Fig. 6A.

By performing a click operation for an instruction to browse questionnaire response results on the screen of the display device 17 of the provision candidate participant-side terminal 120, the API 1100 of the questionnaire management system 401 is called. As a result, the data of display information of the questionnaire response data D3 is read from the database of the questionnaire creating institution-side server 420, and the questionnaire response data D3 is displayed on the screen of the display device 17 of the provision candidate participant-side terminal 120 to be browsable.

### (Ninth Example)

The points given to the recipient candidate participant in response to the questionnaire response can be exchanged for a reward at a predetermined exchange rate during the holding period or the designated period of an event to which the points are given, and the exchange can be limited to exchange at an exchange rate lower than the predetermined exchange rate in other periods.

In the similar manner to Fig. 9, the second remaining point number recording unit 1004 records the current number of remaining points P and the supplementary information CI in association with each recipient candidate participant U11. However, information specifying the event A1 to which the point P is given is added to the supplementary information CI.

For example, in a case in which the recipient candidate participant U11 responds to a questionnaire provided by the provision candidate participant U21 on X0 year Y0 month Z1 day, similarly to Fig. 9, the second remaining point number recording unit 1004 records the supplementary information CI indicating that the number of points of 1000 points P is received from the provision candidate participant U21 on X0 year Y0 month Z1 day, and that the points P of the number of points being 1000 are given during the holding period of the event A1, in association with the recipient candidate participant U11. Similarly, in a case in which the recipient candidate participant U11 responds to a questionnaire provided by the provision candidate participant U22 on X0 year Y0 month Z2 day, the second remaining point number recording unit 1004 records the supplementary information CI indicating that the number of points of 1000 points P is received from the provision candidate participant U22 on X0 year Y0 month Z2 day, and that the points P of the number of points being 1000 are given during the holding period of the event A1, in association with the recipient candidate participant U11. Similarly, in a case in which the recipient candidate participant U11 responds to a questionnaire provided by the provision candidate participant U23 on X0 year Y0 month Z3 day, the second remaining point number recording unit 1004 records the supplementary information CI indicating that the number of points of 1000 points P is received from the provision candidate participant U23 on X0 year Y0 month Z3 day, and that the points P of the number of points being 1000 are given during the holding period of the event A1, in association with the recipient candidate participant U11.

Exchange between the point P acquired in response to the questionnaire response and the reward C can be performed on the screen of the display device 17 of the terminal 130 on the recipient candidate participant U11 side in the similar manner to Figs. 10A and 10B.

The exchange rate for exchange between the point P acquired in response to the questionnaire response and the reward C is determined by the information specifying the event A1 indicated in the supplementary information CI.

The information specifying the event A1 is associated with information of the holding period of the event A1 (for example, X0 year Y0 month Z1 day to X0 year Y0 month Z3 day) or a designated period (for example, X0 year Y0 month Z1 day to X0 year Y0 month Z5 day), the second exchange rate R2 (for example, 1 yen/1 point) that is an exchange rate within the holding period or the designated period, and a sixth exchange rate R6 (for example, 0.5 yen/1 point) that is an exchange rate outside of the holding period or outside of the designated period.

The points P of the number of remaining points N2 recorded in the second remaining point number recording unit 1004 can be converted into the reward C at the second exchange rate R2 (for example, 1 yen/1 point) as long as the reward exchange is received in a period within the holding period (for example, X0 year Y0 month Z1 day to X0 year Y0 month Z3 day) or the designated period (for example, X0 year Y0 month Z1 day to X0 year Y0 month Z5 day) of the event A1 to which the points P are given. However, the points P of the number of remaining points N2 recorded in the second remaining point number recording unit 1004 can be converted into the reward C at the sixth exchange rate R6 (for example, 0.5 yen/1 point) lower than the second exchange rate R2 (for example, 1 yen/1 point) as long as the reward exchange is received in a period out of the holding period (for example, X0 year Y0 month Z1 day to X0 year Y0 month Z3 day) and out of the designated period (for example, X0 year Y0 month Z1 day to X0 year Y0 month Z5 day) of the event A1 to which the points P are given. As a result, it is possible to increase the exchange rate during the event holding period or the designated period.

### (Tenth Example)

An implementation in which a point (referred to as an internal point below in a tenth example) issued by the event management system and an external point handled by an external point management system outside the event management system are exchangeable can be made.

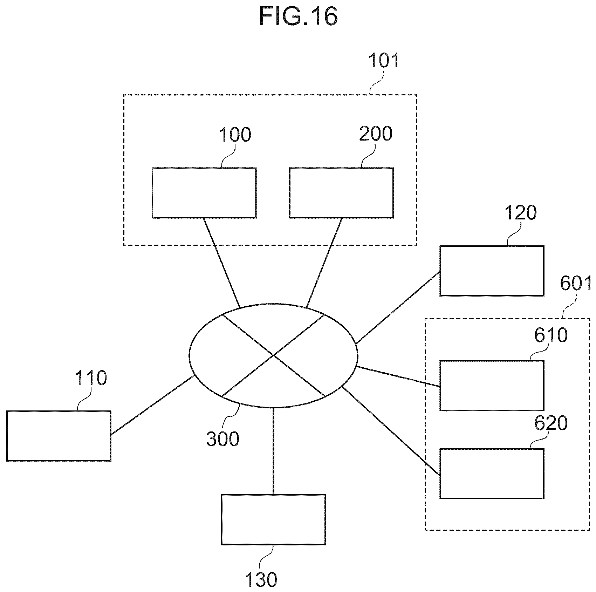

Fig. 16 illustrates a network configuration diagram according to the tenth example. Fig. 16 is a diagram corresponding to Fig. 1, and an external point management system 601 is added to the network configuration illustrated in Fig. 1.

As illustrated in Fig. 16, the intra-event reward distribution system includes a point issuing institution-side terminal 100A and a reward distribution institution-side terminal 100B as the event operating institution-side terminal 100, a provision candidate participant-side terminal 120, a recipient candidate participant-side terminal 130, a server 200, an external point management institution-side terminal 610, an external point management institution-side server 620, and a network 300 that connects the terminals, the server 200, and the external point management institution-side server 620 so that data can be mutually transmitted and received between the terminals, the server 200, and the external point management institution-side server 620.

A management system including the external point management institution-side terminal 610 and the external point management institution-side server 620 is referred to as the external point management system 601. For example, the external point management institution-side terminal 610 and the external point management institution-side server 620 are provided in an external point management institution different from the event operating institution. The external point management institution has an authority to access a database of the external point management institution-side server 620. The external point management institution-side server 620 is a server that manages an external point Pb issued by the external point management system 601 separately from the point P issued in one event A1 or a plurality of events A1 to A10 managed by the event management system 101. The external point Pb can be issued and used, for example, in one event B1 or a plurality of events B1 to B10 different from one event A1 or a plurality of events A1 to A10. The external point Pb can be used, for example, in a store on a website.

The hardware of the external point management institution-side terminal 610 and the external point management institution-side server 620 is configured similarly to the block diagram illustrated in Fig. 2.

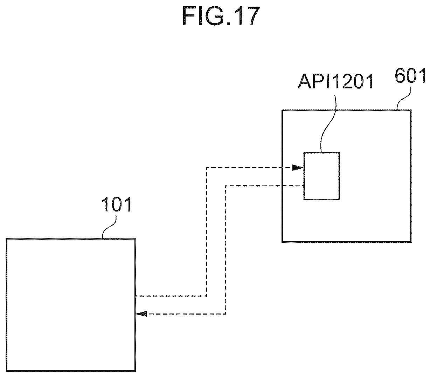

Fig. 17 illustrates a software cooperation relationship between the event management system 101 and the external point management system 601.

The event management system 101 and the external point management system 601 are different systems, and an operation entity (management entity) of the system is different. The management entity of the event management system 101 is an event operating institution, and the management entity of the external point management system 601 is an external point management institution.

The external point management system 601 cooperates with the event management system 101 via an API (application programming interface), and the API is read and performs a specific operation in response to a request from the event management system 101.

The external point management system 601 includes an API 1201 corresponding to the system configuration of the external point management system 601.

The external point management system 601 provides the event management system 101 with a function of a specific processing operation such as displaying a point conversion reception screen 509 which will be described later, in a case in which the API 1201 is called from the event management system 101 via the network 300. Conversion recording data D4 of the external point Pb is stored in the database of the external point management institution-side server 620 and is managed by the external point management system 601.

For example, in a case in which an operation for instructing conversion from the internal point P to the external point Pb is performed on the screen of the display device 17 of the recipient candidate participant-side terminal 130, the API 1201 of the external point management system 601 is called.

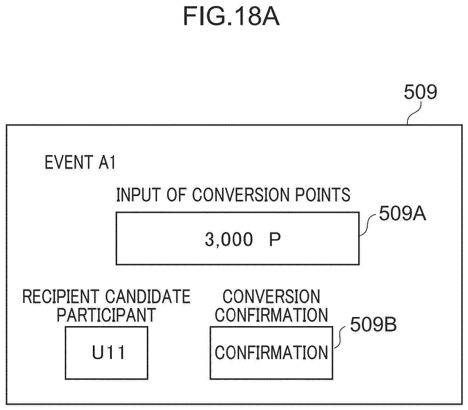

As a result, data of display information of the point conversion reception screen 509 is read from the database of the external point management institution-side server 620, and the point conversion reception screen 509 is displayed on the screen of the display device 17 of the recipient candidate participant-side terminal 130 as illustrated in Fig. 18A.

The point conversion reception screen 509 is a screen for receiving conversion of the internal point P to the external point Pb.

On the point conversion reception screen 509, a conversion point input portion 509A and a conversion confirmation button 509B are displayed. The conversion point input portion 509A permits an input of the number of points within the range of the number of remaining points N2 (for example, 3000 points P) currently held by the recipient candidate participant U11. In a case in which the recipient candidate participant U11 performs an operation of inputting the number of points N4 (for example, 3000 points P) of the internal points P to the conversion point input portion 509A and performs an operation of pressing the conversion confirmation button 509B, point conversion is received.

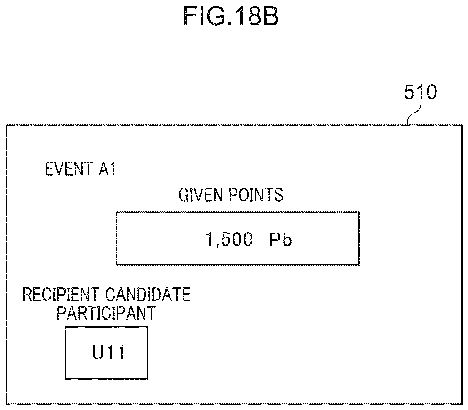

In a case in which the point conversion is received, as illustrated in Fig. 18B, the screen of the display device 17 of the recipient candidate participant-side terminal 130 transitions to a point converted screen 510. The external point management institution-side server 620 converts the internal points P of the number of points N4 (for example, 3000 points P) into the external points Pb of the number of points N5 (for example, 1500 points Pb) at an exchange rate R10 (external point Pb/internal point P), and distributes the external points Pb to the recipient candidate participant U11. The external point management institution-side server 620 stores data indicating that the external points Pb of the number of points N5 (for example, 1500 points Pb) is newly given to the recipient candidate participant U11. The exchange rate R10 is set to a value lower than 1, for example, 0.5.

In a case in which the point conversion is performed, supplementary information CI indicating that the number of points N4 (3000 points P) has been given from the recipient candidate participant U11 to the external point management institution on, for example, X0 year Y0 month Z6 day is added to the second remaining point number recording unit 1004. The number of remaining points N2 (3000 points P) before the point conversion is updated to the number of remaining points N2 (0 points P) obtained by subtracting the number of conversion points N4 (3000 points P) after the point conversion.

For example, in a case in which an operation for instructing conversion to the internal point P from the external point Pb is performed on the screen of the display device 17 of the recipient candidate participant-side terminal 130, the API 1201 of the external point management system 601 is called.

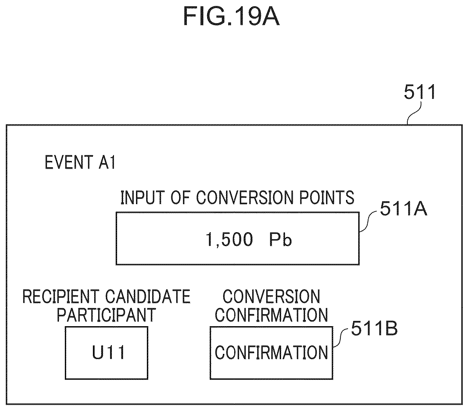

As a result, data of display information of a point conversion reception screen 511 is read from the database of the external point management institution-side server 620, and the point conversion reception screen 511 is displayed on the screen of the display device 17 of the recipient candidate participant-side terminal 130 as illustrated in Fig. 19A.

The point conversion reception screen 511 is a screen for receiving conversion of the external point Pb into the internal point P.

On the point conversion reception screen 511, a conversion point input portion 511A and a conversion confirmation button 511B are displayed. The conversion point input portion 511A permits an input of the number of points within the range of the number of points of external points Pb (for example, 1500 points Pb) currently held by the recipient candidate participant U11.

In a case in which the recipient candidate participant U11 performs an operation of inputting the number of points N5 (for example, 1500 points P) of the external points Pb to the conversion point input portion 510A and performs an operation of pressing the conversion confirmation button 511B, point conversion is received.

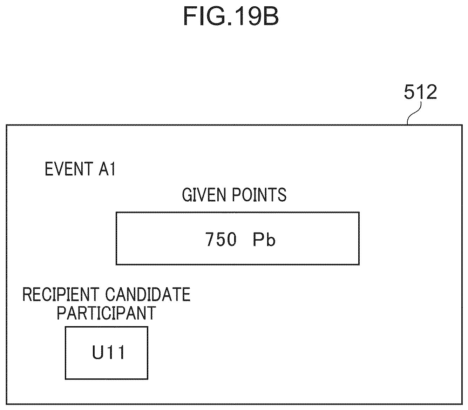

In a case in which the point conversion is received, as illustrated in Fig. 19B, the screen of the display device 17 of the recipient candidate participant-side terminal 130 transitions to a point converted screen 512. The external point management institution-side server 620 converts the external points Pb of the number of points N5 (for example, 1500 points Pb) into the internal points P of the number of points N6 (for example, 750 points P) at an exchange rate R11 (internal point P/external point Pb), and distributes the internal point P to the recipient candidate participant U11. The external point management institution-side server 620 stores data indicating that the recipient candidate participant U11 newly uses the external points Pb of the number of points N5 (for example, 1500 points Pb). The exchange rate R11 is set to a value lower than 1, for example, 0.5.

In a case in which the point conversion is performed, the supplementary information CI indicating that the number of points N6 (750 points P) is issued by the external point management institution on, for example, X0 year Y0 month Z7 day and the number of points N6 (750 points P) is given to the recipient candidate participant U11 from the external point management institution is added to the second remaining point number recording unit 1004. The number of remaining points N2 (0 points P) before the point conversion is updated to the number of remaining points N2 (750 points P) obtained by adding the number of conversion points N6 (750 points P) after the point conversion.

### (Second Embodiment)

In the first embodiment, a reward is given to a questionnaire response, but a reward can be given to an action taken with respect to a provision candidate participant by a recipient candidate participant.

The action recording unit 1007 records an action taken with respect to the provision candidate participant by the recipient candidate participant in association with each of the recipient candidate participant and the provision candidate participant.

In a case in which an action for which a reward is to be distributed is recorded in the action recording unit 1007, points P of the number of points according to the action are given. The action for which the reward is to be distributed is, for example, an action for contributing to the provision candidate participant, for example, placing a business card in a company booth where the provision candidate participant exhibits, exchanging a business card with the provision candidate participant, inquiring about an exhibit of the provision candidate participant, participation in a session hosted by the provision candidate participant or advertising, participation in a seminar hosted by the provision candidate participant or advertising, or the like.

For example, in a case in which the recipient candidate participant U11 takes an action of placing a business card in the exhibit booth of the provision candidate participant U21, it is recorded that the points P of the number of points (100 points P) as a reward corresponding to the action of placing a business card is given from the provision candidate participation U21 to the recipient candidate participant U11.

In a case in which the action for which the reward is to be distributed (for example, placing a business card of the provision candidate participant U21 in the booth) is recorded by the action recording unit 1007, the first remaining point number recording unit 1003 records the new number of remaining points N1 obtained by subtracting the number of points (for example, 100 points P) according to the reward from the current number of remaining points N1 associated with the provision candidate participant (for example, the provision candidate participant U21) who has taken the action, and records the supplementary information CI in association with the number of points (100 points P) according to the reward.

In a case in which the action for which the reward is to be distributed (for example, placing a business card of the provision candidate participant U21 in the booth) is recorded by the action recording unit 1007, the second remaining point number recording unit 1004 records the new number of remaining points N2 obtained by adding the number of points (for example, 100 points P) according to the reward to the current number of remaining points N2 associated with the recipient candidate participant (for example, the recipient candidate participant U11) who has taken the action, and records the supplementary information CI in association with the number of points (100 points P) according to the reward.

In a similar manner to the first to tenth examples, the supplementary information CI includes the information specifying a recipient candidate participant (for example, recipient candidate participant U11) as a giving destination of the number of points (for example, 100 points P) according to the reward and a provision candidate participant (for example, provision candidate participant U21) as a giving source and/or information of a giving time or/and a reward exchange deadline, or the like.

Processing such as point issuance, reward distribution, refund, and conversion to an external point is performed in the similar manner to the first to tenth examples.

The disclosure of Japanese Patent Application No. 2023-011177 filed on January 27, 2023 is incorporated herein by reference in its entirety.

### REFERENCE SIGNS LIST

- 101: event management system
- 401: questionnaire management system
- 601: external point management system
- 1001: point issuing unit
- 1002: questionnaire response receiving unit
- 1003: first remaining point number recording unit
- 1004: second remaining point number recording unit
- 1005: reward distribution unit
- 1006: refund unit
- 1007: action recording unit
- 1008: third remaining point number recording unit
- 1009: point type conversion receiving unit
- 1010: point type conversion processing unit
- 1011: determination unit
- 1012: point addition/subtraction processing unit
- 1013: advance payment account registration unit
- 1014: questionnaire provision count calculation unit

## Claims

1. An intra-event reward distribution system that distributes a reward, in accordance with a number of points acquired by a recipient candidate participant in one or a plurality of events, to the recipient candidate participant, the intra-event reward distribution system comprising:
a point issuing unit that converts currency received from a provision candidate participant in one or a plurality of events into points at a first exchange rate, and issues points at a number of points corresponding to the received currency to the provision candidate participant;
a questionnaire response receiving unit that receives a questionnaire response to a questionnaire associated with each provision candidate participant in association with each recipient candidate participant;
a first remaining point number recording unit that records a new number of remaining points obtained by adding a number of issued points to a current number of remaining points associated with the provision candidate participant who has received issued points in a case in which the points are issued from the point issuing unit, and records a new number of remaining points obtained by subtracting a number of points associated with a questionnaire response from the current number of remaining points associated with the provision candidate participant who has received the questionnaire response in a case in which the questionnaire response receiving unit receives the questionnaire response;
a second remaining point number recording unit that records a new number of remaining points obtained by adding the number of points associated with the questionnaire response to a current number of remaining points associated with the recipient candidate participant who has received the questionnaire response in a case in which the questionnaire response receiving unit receives the questionnaire response; and
a reward distribution unit that converts points at a number of points received within a range of the number of remaining points recorded in the second remaining point number recording unit from the recipient candidate participant into a reward at a second exchange rate and distributes a reward corresponding to the number of received points to the recipient candidate participant.

2. The intra-event reward distribution system according to claim 1, further comprising a refund unit that converts points at the number of points received within the range of the number of remaining points from the provision candidate participant into currency at a third exchange rate, and refunds, to the provision candidate participant, any one or a combination of two or more of currency corresponding to the number of received points or digital points, a prepaid card, or an article having a value corresponding to the currency.

3. The intra-event reward distribution system according to claim 1, wherein:
the first exchange rate is R1 = currency/points, and the second exchange rate is R2 = currency/points, and
the second exchange rate R2 is equal to or lower than the first exchange rate R1.

4. The intra-event reward distribution system according to claim 1, wherein the reward distribution unit distributes a reward in any one or a combination of two or more of tangible currency, a prepaid card, digital points, digital currency, virtual currency, or a novelty item.

5. The intra-event reward distribution system according to claim 1, wherein:
the reward distributed by the reward distribution unit is any one or a combination of two or more of tangible currency, a prepaid card, or a novelty item, and
the reward distribution unit delivers an amount of reward obtained by subtracting one or more of a transfer fee, a delivery fee or a transfer/delivery fee from the number of received points.

6. The intra-event reward distribution system according to claim 1, wherein:
the reward distributed by the reward distribution unit is one or more of digital points, digital currency or virtual currency, and
the reward distribution unit displays a right to receive the reward on a screen of a terminal at a side of the recipient candidate participant.

7. The intra-event reward distribution system according to claim 2, wherein:
the first exchange rate is R1 = currency/points, and the third exchange rate is R3 = currency/points,
the first exchange rate R1 is higher than the third exchange rate R3, and
the point issuing unit issues points including, in advance, an issuance fee corresponding to a difference between the third exchange rate R3 and the first exchange rate R1.

8. The intra-event reward distribution system according to claim 2, wherein the refund unit refunds any one or a combination of two or more of currency obtained by subtracting a refund fee from the number of received points or digital points, a prepaid card, or an article having a value corresponding to the currency.

9. The intra-event reward distribution system according to claim 1, further comprising:
an action receiving unit that receives an action for an event content associated with each provision candidate participant in association with each recipient candidate participant; and
a third remaining point number recording unit that records a number of remaining points in association with each recipient candidate participant, in which a number of points associated with the action received by the action receiving unit is added to a current number of remaining points.

10. The intra-event reward distribution system according to claim 9, further comprising:
a point-type conversion receiving unit that receives point-type conversion of points recorded in the third remaining point number recording unit from a recipient candidate participant into points recorded in the second remaining point number recording unit; and
a point-type conversion processing unit that converts the points recorded in the third remaining point number recording unit into the points recorded in the second remaining point number recording unit at a fourth exchange rate in a case in which the point-type conversion receiving unit receives the point-type conversion, and adds a number of converted conversion points to a current number of remaining points of the second remaining point number recording unit.

11. The intra-event reward distribution system according to claim 10, wherein:
the second exchange rate is R2 = currency/points, and the fourth exchange rate is R4 = currency/points, and
the fourth exchange rate R4 is lower than the second exchange rate R2.

12. The intra-event reward distribution system according to claim 1, wherein each time the number of points associated with the questionnaire response received by the questionnaire response receiving unit is added to the current number of remaining points, the second remaining point number recording unit records the added number of points in association with the provision candidate participant who has received the questionnaire response.

13. The intra-event reward distribution system according to claim 1, wherein each time the number of points associated with the questionnaire response received by the questionnaire response receiving unit is subtracted from the current number of remaining points, the first remaining point number recording unit records the subtracted number of points in association with the recipient candidate participant who has received the questionnaire response.

14. The intra-event reward distribution system according to claim 10, wherein each time the number of conversion points is added to the current number of remaining points of the second remaining point number recording unit, the second remaining point number recording unit records an addition time of the number of conversion points in association with the number of conversion points.

15. The intra-event reward distribution system according to claim 10, wherein the point-type conversion receiving unit rejects reception of one or both of point-type exchange of a number of points exceeding an upper limit value or point-type conversion at a time exceeding an exchange deadline.

16. The intra-event reward distribution system according to claim 15, wherein in a case of rejecting the reception of one or both of the point-type exchange of the number of points exceeding the upper limit value or the point-type conversion at the time exceeding the exchange deadline, the point-type conversion receiving unit displays a warning of the rejection on a screen of a terminal at a side of the recipient candidate participant.

17. The intra-event reward distribution system according to claim 1, further comprising a determination unit that compares the number of remaining points recorded in the first remaining point number recording unit with the number of points associated with the questionnaire response in a case in which the questionnaire response receiving unit receives the questionnaire response, and determines whether or not the number of points associated with the questionnaire response can be given to the recipient candidate participant, wherein:
in a case in which the determination unit determines that the number of points associated with the questionnaire response can be given to the recipient candidate participant, addition/subtraction processing of subtracting the number of points associated with the questionnaire response from the current number of remaining points recorded in the first remaining point number recording unit and adding the number of points associated with the questionnaire response to the current number of remaining points recorded in the second remaining point number recording unit is executed, and
the intra-event reward distribution system further comprises a point addition/subtraction processing unit that executes suspension processing of suspending the addition/subtraction processing in a case in which the determination unit determines that the number of points associated with a questionnaire response cannot be given to the recipient candidate participant.

18. The intra-event reward distribution system according to claim 17, further comprising an advance payment account registration unit that registers an advance payment account in association with a provision candidate participant,
wherein the point addition/subtraction processing unit executes replacement request processing of withdrawing currency corresponding to the number of points associated with a questionnaire response from the advance payment account that is associated with the provision candidate participant and on which the suspension processing has been performed, and executes the addition/subtraction processing, in a case in which the suspension processing has been executed.

19. The intra-event reward distribution system according to claim 1, further comprising a questionnaire provision count calculation unit that compares the number of remaining points recorded in the first remaining point number recording unit with the number of points associated with a questionnaire response and calculates a number of times of questionnaires with which a reward can be provided,
wherein the number of times of the questionnaires with which a reward can be provided is displayed on a screen of a terminal at a side of the recipient candidate participant.

20. The intra-event reward distribution system according to claim 1, further comprising a questionnaire provision count calculation unit that compares the number of remaining points recorded in the first remaining point number recording unit with the number of points associated with a questionnaire response and calculates a number of times of questionnaires with which a reward can be provided,
wherein, in a case in which the number of times of the questionnaires with which a reward can be provided is equal to or less than a predetermined number of times, a warning of this fact is displayed on a screen of a terminal at a side of the recipient candidate participant.

21. The intra-event reward distribution system according to claim 1, further comprising a questionnaire provision count calculation unit that compares the number of remaining points recorded in the first remaining point number recording unit with the number of points associated with a questionnaire response and calculates a number of times of questionnaires with which a reward can be provided,
wherein, in a case in which it is determined that provision of a questionnaire with a reward is not possible based on a calculation result of the questionnaire provision count calculation unit, a warning indicating that the provided questionnaire does not have a reward is displayed on a screen of a terminal at a side of the recipient candidate participant.

22. The intra-event reward distribution system according to claim 1, wherein points at the number of remaining points recorded in the second remaining point number recording unit are exchangeable for a product or a service provided by an event cooperation institution at a fifth exchange rate,
the second exchange rate is R2 = currency/points, and the fifth exchange rate is R5 = currency/points, and
the fifth exchange rate R5 is set higher than the second exchange rate R2.

23. The intra-event reward distribution system according to claim 1, wherein the first remaining point number recording unit records supplementary information indicating one or both of a provision time of the number of points or a reward exchange deadline in association with the number of points each time the number of points is added to the current number of remaining points of the first remaining point number recording unit, and records one or both of information specifying a recipient candidate participant as a provision destination of the number of points and a provision candidate participant as a provision source or supplementary information indicating one or both of a provision time or a reward exchange deadline in association with the number of points each time the number of points is subtracted from the current number of remaining points of the first remaining point number recording unit.

24. The intra-event reward distribution system according to claim 23, further comprising a reward exchange possibility determination unit that determines whether or not points at a number of points associated with the supplementary information are exchangeable for a reward based on the supplementary information.

25. The intra-event reward distribution system according to claim 1, wherein each time the number of points is added to the current number of remaining points of the second remaining point number recording unit, the second remaining point number recording unit records one or both of information specifying a provision candidate participant as a provision source of the number of points and a recipient candidate participant as a provision destination or supplementary information indicating one or both of a provision time or a reward exchange deadline in association with the number of points.

26. The intra-event reward distribution system according to claim 25, further comprising a reward exchange possibility determination unit that determines whether or not points at a number of points associated with the supplementary information are exchangeable for a reward based on the supplementary information.

27. The intra-event reward distribution system according to claim 1, further comprising a point addition/subtraction processing unit that executes addition/subtraction processing of subtracting the number of points associated with a questionnaire response from the current number of remaining points recorded in the first remaining point number recording unit and adding the number of points to the current number of remaining points recorded in the second remaining point number recording unit based on a condition of approval by the provision candidate participant in a case in which the questionnaire response is received from the recipient candidate participant.

28. The intra-event reward distribution system according to claim 23 or 25, further comprising a point addition/subtraction processing unit that determines whether or not the number of points associated with a questionnaire response is to be given to the recipient candidate participant based on the supplementary information in a case in which the questionnaire response is received from the recipient candidate participant, and executes addition/subtraction processing of subtracting the number of points associated with a questionnaire response from the current number of remaining points recorded in the first remaining point number recording unit and adding the number of points to the current number of remaining points recorded in the second remaining point number recording unit on a condition of determination that the points are to be given to the recipient candidate participant.

29. The intra-event reward distribution system according to claim 1, wherein the reward distribution unit distributes a reward corresponding to a number of points received from the recipient candidate participant based on a condition of approval by a provision candidate participant who has given the number of points associated with the questionnaire response to the recipient candidate participant.

30. The intra-event reward distribution system according to claim 23 or 25, wherein, in a case in which an exchange between points and a reward is received from the recipient candidate participant, it is determined whether or not the reward is to be distributed to the recipient candidate participant based on the supplementary information, and the reward distribution unit distributes a reward corresponding to the number of points received from the recipient candidate participant based on a condition that it is determined that the reward is to be given to the recipient candidate participant.

31. The intra-event reward distribution system according to claim 1, wherein:
one or both of an upper limit value of a number of responses to a questionnaire with a reward per event or an upper limit value of a number of responses to a questionnaire that can be made by one provision candidate participant are set, and
the questionnaire response receiving unit rejects reception of a questionnaire response exceeding the upper limit value.

32. The intra-event reward distribution system according to claim 1, wherein:
one or both of an upper limit value of a number of responses to a questionnaire with a reward per event or an upper limit value of a number of responses to a questionnaire that can be made by one provision candidate participant are set, and
the reward distribution unit rejects distribution of a reward corresponding to a questionnaire response exceeding the upper limit value.

33. The intra-event reward distribution system according to claim 1, wherein a server that manages the questionnaire is included in an event management system that manages the one or plurality of events.

34. The intra-event reward distribution system according to claim 1, further comprising:
an event management system including a server that manages the one or plurality of events; and
a questionnaire management system that includes a server that manages the questionnaire, and that cooperates with the event management system by an application programming interface (API) in the questionnaire management system,
wherein, in a case in which questionnaire display is requested by a terminal at a side of the recipient candidate participant, the API in the questionnaire management system is called, and a questionnaire is displayed on a screen of the terminal at the recipient candidate participant side.

35. The intra-event reward distribution system according to claim 22, wherein:
supplementary information, specifying an event in which points at the number of remaining points recorded in the second remaining point number recording unit are given, is recorded in association with the points, and
the points at the number of remaining points recorded in the second remaining point number recording unit can be converted into a reward at the second exchange rate within a holding period or a designated period of the event in which the points are given and are exchangeable, at a fifth exchange rate, for a product or a service provided by the event cooperation institution within the holding period or the designated period of the event in which the points are given.

36. The intra-event reward distribution system according to claim 1, wherein:
supplementary information, specifying an event in which points at the number of remaining points recorded in the second remaining point number recording unit are given, is recorded in association with the points,
the points at the number of remaining points recorded in the second remaining point number recording unit can be converted into a reward at the second exchange rate within a holding period or a designated period of the event in which the points are given and can be converted into a reward at the sixth exchange rate outside of the holding period or outside of the designated period of the event in which the points are given,
the second exchange rate is R2 = currency/points, and the sixth exchange rate is R6 = currency/points, and
the sixth exchange rate R6 is set lower than the second exchange rate R2.

37. The intra-event reward distribution system according to claim 1, further comprising:
an event management system including a server configured to manage internal points issued in the one or plurality of events; and
an external point management system including a server configured to manage external points issued in an event other than the one or plurality of events,
wherein the internal points are convertable into the external points.

38. The intra-event reward distribution system according to claim 37, wherein:
an exchange rate in a case in which the internal points are converted into the external points is:
R10 = external points/internal points, and
the exchange rate R10 is set to a value lower than 1.

39. The intra-event reward distribution system according to claim 1, further comprising:
an event management system including a server configured to manage internal points issued in the one or plurality of events; and
an external point management system including a server configured to manage external points issued in an event other than the one or plurality of events,
wherein the external points are convertable into the internal points, and
supplementary information specifying that the points are issued in an event other than the one or plurality of events is recorded in association with the internal points converted from the external points.

40. The intra-event reward distribution system according to claim 39, wherein:
an exchange rate in a case in which the external points are converted into the internal points is:
R11 = internal points/external points, and
the exchange rate R11 is set to a value lower than 1.

41. An intra-event reward distribution system that distributes a reward, in accordance with a number of points acquired by a recipient candidate participant in one or a plurality of events, to the recipient candidate participant, the intra-event reward distribution system comprising:
an action recording unit that records an action taken with respect to a provision candidate participant by the recipient candidate participant in association with each of the recipient candidate participant and the provision candidate participant;
a first remaining point number recording unit that records, in a case in which an action for which a reward is to be distributed is recorded by the action recording unit, a new number of remaining points obtained by subtracting the number of points according to the reward from a current number of remaining points associated with the provision candidate participant with respect to which the action is taken, and records, in association with the number of points according to the reward, one or both of information specifying a recipient candidate participant as a provision destination of the number of points according to the reward and a provision candidate participant as a provision source, or supplementary information indicating one or both of a provision time or a reward exchange deadline; and
a second remaining point number recording unit that records, in a case in which the action for which the reward is to be distributed is recorded by the action recording unit, a new number of remaining points obtained by adding the number of points according to the reward to the current number of remaining points associated with the recipient candidate participant who has taken the action.

42. The intra-event reward distribution system according to claim 41, further comprising a reward exchange possibility determination unit that determines whether or not points at a number of points associated with the supplementary information are exchangeable for a reward based on the supplementary information.

43. An intra-event reward distribution system that distributes a reward, in accordance with a number of points acquired by a recipient candidate participant in one or a plurality of events, to the recipient candidate participant, the intra-event reward distribution system comprising:
an action recording unit that records an action taken with respect to a provision candidate participant by the recipient candidate participant in association with each of the recipient candidate participant and the provision candidate participant;
a first remaining point number recording unit that records, in a case in which an action for which a reward is to be distributed is recorded by the action recording unit, a new number of remaining points obtained by subtracting the number of points according to the reward from a current number of remaining points associated with the provision candidate participant with respect to which the action is taken; and
a second remaining point number recording unit that records, in a case in which the action for which the reward is to be distributed is recorded by the action recording unit, a new number of remaining points obtained by adding the number of points according to the reward to the current number of remaining points associated with the recipient candidate participant who has taken the action, and records, in association with the number of points according to the reward, one or both of information specifying a recipient candidate participant as a provision destination of the number of points according to the reward and a provision candidate participant as a provision source, or supplementary information indicating one or both of a provision time or a reward exchange deadline.

44. The intra-event reward distribution system according to claim 43, further comprising a reward exchange possibility determination unit that determines whether or not points at the number of points associated with the supplementary information are exchangeable for a reward based on the supplementary information.

45. The intra-event reward distribution system according to claim 41 or 43, further comprising:
an event management system including a server configured to manage internal points issued in the one or plurality of events; and
an external point management system including a server configured to manage external points issued in an event other than the one or plurality of events,
wherein the internal points are convertable into the external points.

46. The intra-event reward distribution system according to claim 41 or 43, further comprising:
an event management system including a server configured to manage internal points issued in the one or plurality of events; and
an external point management system including a server configured to manage external points issued in an event other than the one or plurality of events,
wherein the external points are convertable into the internal points, and
supplementary information specifying that the points are issued in an event other than the one or plurality of events is recorded in association with the internal points converted from the external points.

47. An intra-event reward distribution system that distributes a reward, in accordance with a number of points acquired by a recipient candidate participant in one or a plurality of events, to the recipient candidate participant, the intra-event reward distribution system comprising:
a point issuing unit that issues points at a predetermined number of points to a provision candidate participant;
a questionnaire response receiving unit that receives a questionnaire response to a questionnaire associated with each provision candidate participant in association with each recipient candidate participant;
a first remaining point number recording unit that records a new number of remaining points obtained by adding a number of issued points to a current number of remaining points associated with the provision candidate participant for whom points are issued in a case in which the points are issued from the point issuing unit, and records a new number of remaining points obtained by subtracting a number of points associated with a questionnaire response from the current number of remaining points associated with a provision candidate participant who has received the questionnaire response in a case in which the questionnaire response receiving unit receives the questionnaire response;
a second remaining point number recording unit that records a new number of remaining points obtained by adding the number of points associated with the questionnaire response to a current number of remaining points associated with a recipient candidate participant who has received the questionnaire response in a case in which the questionnaire response receiving unit receives the questionnaire response; and
a reward distribution unit that converts points at a number of points received within a range of the number of remaining points recorded in the second remaining point number recording unit from the recipient candidate participant into a reward at a second exchange rate and distributes a reward corresponding to the number of received points to the recipient candidate participant.

48. An intra-event reward distribution system that distributes a reward, in accordance with a number of points acquired by a recipient candidate participant in one or a plurality of events, to the recipient candidate participant, the intra-event reward distribution system comprising:
a first remaining point number recording unit that records, each time the recipient candidate participant takes an action with respect to a provision candidate participant, a new number of remaining points obtained by subtracting the number of points according to the action from a current number of remaining points associated with the provision candidate participant with respect to which the action is taken;
a supplementary information recording unit that records the number of points according to the action, and one or both of information specifying a recipient candidate participant as a provision destination of the number of points and a provision candidate participant as a provision source or supplementary information indicating one or both of a provision time or an exchange deadline for the reward, in association with the action each time the recipient candidate participant takes an action with respect to the provision candidate participant; and
a second remaining point number recording unit that records a new number of remaining points obtained by adding the number of points according to the action to the current number of remaining points associated with the recipient candidate participant who has taken the action, each time the recipient candidate participant takes the action with respect to the provision candidate participant.

49. The intra-event reward distribution system according to claim 48, further comprising:
a reward exchange possibility determination unit that determines whether or not points at the number of remaining points recorded in the second remaining point number recording unit are exchangeable for a reward based on the supplementary information; and
a reward distribution unit that convert points at the number of points received from a recipient candidate participant within a range determined to be exchangeable for a reward by the reward exchange possibility determination unit, among the number of remaining points recorded in the second remaining point number recording unit, into a reward at a predetermined exchange rate and distributes a reward corresponding to the number of received points to the recipient candidate participant,
wherein the second remaining point number recording unit records a new number of remaining points obtained by subtracting the number of points converted into the reward from a current number of remaining points associated with the recipient candidate participant whose points have been converted into the reward.

50. The intra-event reward distribution system according to claim 48, further comprising an invalid point determination unit that determines a number of points to be invalidated among the number of remaining points recorded in the second remaining point number recording unit based on the supplementary information,
wherein the second remaining point number recording unit records a new number of remaining points obtained by subtracting the number of points to be invalidated from a current number of remaining points associated with a recipient candidate participant whose points are determined to be invalidated by the invalid point determination unit.

51. An intra-event reward distribution system that distributes a reward in accordance with a number of acquired points, the intra-event reward distribution system comprising:
a supplementary information recording unit that records, each time a person involved in an event takes an action, supplementary information indicating a number of points according to the action and an exchange deadline for a reward in association with the action; and
a reward exchange possibility determination unit that determines whether or not points are exchangeable for a reward based on the supplementary information.

52. An intra-event reward distribution system in which a reward according to a number of acquired points is distributed, the intra-event reward distribution system comprising:
a supplementary information recording unit that records supplementary information including usage restriction information on the acquired points in association with a state change of the points acquired by a person involved in an event; and
a point usage possibility determination unit that determines whether or not the points are available based on the supplementary information.
